(19) **Europäisches Patentamt**
**European Patent Office**
**Office européen des brevets**

(11) **EP 4 081 782 B1**

(12) **FASCICULE DE BREVET EUROPEEN**

(45) Date de publication et mention
de la délivrance du brevet:
**27.08.2025 Bulletin 2025/35**

(21) Numéro de dépôt: **20838568.2**

(22) Date de dépôt: **24.12.2020**

(51) Classification Internationale des Brevets (IPC):
**G01N 21/17** *(2006.01)*

(52) Classification Coopérative des Brevets (CPC):
**G01N 21/1702; G01N 21/1717;** G01N 2021/1731

(86) Numéro de dépôt international:
**PCT/EP2020/087866**

(87) Numéro de publication internationale:
**WO 2021/130364 (01.07.2021 Gazette 2021/26)**

(54) **DÉTECTEUR PHOTOACOUSTIQUE OU PHOTOTHERMIQUE COMPORTANT UN TRANSDUCTEUR OPTIQUE**

PHOTOAKUSTISCHER ODER PHOTOTHERMISCHER DETEKTOR MIT EINEM OPTISCHEN WANDLER

PHOTOACOUSTIC OR PHOTOTHERMAL DETECTOR WITH AN OPTICAL TRANSDUCER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2019 FR 1915696**

(43) Date de publication de la demande:
**02.11.2022 Bulletin 2022/44**

(73) Titulaires:
• **Commissariat à l'Energie Atomique et aux Energies Alternatives**
**75015 Paris (FR)**
• **Université Grenoble Alpes**
**38400 Saint-Martin-d'Hères (FR)**
• **Centre National de la Recherche Scientifique**
**75016 Paris 16 (FR)**
• **Institut Polytechnique de Grenoble**
**38000 Grenoble (FR)**

(72) Inventeurs:
• **LAUWERS, Thomas**
**38054 GRENOBLE Cedex 09 (FR)**
• **BASROUR, Skandar**
**38054 GRENOBLE CEDEX 09 (FR)**
• **COUTARD, Jean-Guillaume**
**38054 GRENOBLE CEDEX 09 (FR)**
• **GLIERE, Alain**
**38054 GRENOBLE CEDEX 09 (FR)**
• **LAFFONT, Guillaume**
**38054 GRENOBLE CEDEX 09 (FR)**

(74) Mandataire: **INNOV-GROUP**
**209 Avenue Berthelot**
**69007 Lyon (FR)**

(56) Documents cités:
**WO-A1-2019/170884**

• **ROSENTHAL AMIR ET AL: "Embedded ultrasound sensor in a silicon-on-insulator photonic platform", APPLIED PHYSICS LETTERS, A I P PUBLISHING LLC, US, vol. 104, no. 2, 13 January 2014 (2014-01-13), XP012180631, ISSN: 0003-6951, [retrieved on 19010101], DOI: 10.1063/1.4860983**
• **HEMING WEI ET AL: "Direct laser writing of a phase-shifted Bragg grating waveguide for ultrasound detection", OPTICS LETTERS, vol. 44, no. 15, 25 July 2019 (2019-07-25), US, pages 3817 - 3820, XP055722604, ISSN: 0146-9592, DOI: 10.1364/OL.44.003817**

**(Cont. page suivante)**

- YANG ET AL: "Time-resolved photoacoustic spectroscopy using fiber Bragg grating acoustic transducers", OPTICS COMMUNICATIONS, ELSEVIER, AMSTERDAM, NL, vol. 276, no. 1, 7 June 2007 (2007-06-07), pages 97 - 106, XP022108809, ISSN: 0030-4018, DOI: 10.1016/J.OPTCOM.2007.03.075
- GUAN BAI-OU ET AL: "Acoustic and Ultrasonic Detection With Radio-Frequency Encoded Fiber Laser Sensors", IEEE JOURNAL OF SELECTED TOPICS IN QUANTUM ELECTRONICS, IEEE SERVICE CENTER, PISCATAWAY, NJ, US, vol. 23, no. 2, 1 March 2017 (2017-03-01), pages 1 - 12, XP011642659, ISSN: 1077-260X, [retrieved on 20170314], DOI: 10.1109/JSTQE.2016.2635035
- JUNTAO WU ET AL: "Fiber-optic photo-acoustic spectroscopy sensor for harsh environment gas detection", SPIE - INTERNATIONAL SOCIETY FOR OPTICAL ENGINEERING. PROCEEDINGS, vol. 66980E-7, 17 September 2007 (2007-09-17), US, pages 66980E - 1, XP055722305, ISSN: 0277-786X, ISBN: 978-1-5106-3549-4, DOI: 10.1117/12.734092
- S.M. LEINDERS ET AL: "A sensitive optical micro-machined ultrasound sensor (OMUS) based on a silicon photonic ring resonator on an acoustical membrane", SCIENTIFIC REPORTS, vol. 5, no. 1, 22 September 2015 (2015-09-22), pages 1 - 9, XP055586034, DOI: 10.1038/srep14328

**Description**

## DOMAINE TECHNIQUE

Le domaine technique de l'invention est la détection d'un analyte dans un milieu selon le principe de la détection photoacoustique ou la détection photothermique.

## ART ANTERIEUR

La détection photoacoustique est basée sur la détection d'une onde acoustique générée sous l'effet de l'absorption, par un milieu analysé, d'une onde d'excitation électromagnétique, dite onde d'excitation, impulsionnelle ou modulée en amplitude. L'onde acoustique est formée suite à un échauffement de molécules absorbantes, présentes dans le milieu analysé, sous l'effet de l'absorption de l'onde d'excitation. L'échauffement entraîne une dilatation thermique modulée du milieu, cette dernière étant à l'origine de l'onde acoustique.

La détection photoacoustique peut être spécifique à un analyte particulier, en ajustant la longueur d'onde de l'onde d'excitation à une longueur d'onde d'absorption de l'analyte. La détection photoacoustique a été ainsi été appliquée pour détecter des espèces gazeuses dans un gaz, ou pour détecter la présence de molécules particulières dans des tissus biologiques. La longueur d'onde de l'onde incidente se situe fréquemment dans le l'infra-rouge.

La détection photoacoustique constitue alors une technique d'analyse non invasive, pouvant être mise en œuvre dans des milieux diffusants ou opaques.

Des applications de la détection photoacoustique sous l'eau ont été décrites dans la publication Rosenthal « Embedded ultrasound sensor in a silicon-on-insulator photonic platform », ainsi que dans la publication Guan « Acoustic and Ultrasonic Detection With Radio-Frequency Encoded Fiber Laser Sensors ».

Le document Yang et al « Time-resolved photoacoustic spectroscopy using fiber Bragg grating acoustic transducers » décrit le recours une fibre optique, comportant un réseau de Bragg, en tant que détecteur d'une onde photoacoustique.

D'autres dispositifs de détection photoacoustique sont décrits dans Guan B. « Acoustic and ultrasonic detection with radio-frequency », ainsi que dans Juntao W. « Fiber-optic photoacoustic spectroscopy sensor for harsh environment gas detection ».

La publication WEI H. "Direct laser writing of a phase-shifted Bragg grating waveguide for ultrasound detection" décrit une fabrication d'un guide d'onde par inscription laser femtoseconde.

Des résonateurs optiques sont par ailleurs décrits dans WO2019170884 ou dans Leinders, S « A sensitive optical micro-machined ultrasound sensor (OMUS) based on a silicon photonic ring resonator on an acoustical membrane ».

Des applications de détection photoacoustique à des tissus biologiques sont par exemple décrits dans les publications suivantes :

- Bauer AJ. "IR-spectroscopy for skin in vivo : Optimal skin sites and properties for non-invasive glucose measurement by photoacoustic and photothermal spectroscopy" ; Journal of biopohtonics 11 (2018) ;
- "Windowless ultrasound photoacoustic cell for in-vivo mid-IR spectroscopy of human epidermis : Low interference by changes of air pressure, temperature, and humidity caused by skin contact opens the possibility for a non-invasive monitoring of glucose in the interstitial fluid", Rev. Sci. Instrum. 84, 084901 (2013).

Dans ces publications, on utilise une source de lumière laser impulsionnelle, activée selon une fréquence de plusieurs dizaines de kHz. L'objectif est d'estimer une concentration de glucose dans le fluide interstitiel corporel, à une profondeur comprise entre 10 $\mu$m et 50 $\mu$m sous la peau d'un utilisateur. On utilise pour cela un dispositif de détection photoacoustique placé contre la peau d'un utilisateur.

On connaît également les principes de la détection photothermique, basée sur une détection d'une variation d'une température d'un milieu analysé, sous l'effet de l'absorption, par le milieu, d'une onde d'excitation électromagnétique impulsionnelle ou modulée en amplitude. La variation de température résulte de l'échauffement de molécules absorbantes, présentes dans le milieu analysé, sous l'effet de l'absorption de l'onde d'excitation.

La modulation périodique de la température peut par exemple être détectée en estimant une variation de l'indice optique du milieu, sous l'effet de la variation de température. Cela est par exemple décrit dans EP3359949B1.

Qu'il s'agisse de la détection photothermique ou de la détection photoacoustique, l'échantillon peut être un échantillon gazeux, l'objectif visé étant la détection de certaines espèces gazeuses ou de certaines particules, par considérées comme polluantes. Il peut également s'agir d'échantillons liquides ou solides, les applications pouvant concerner le domaine de l'industrie, par exemple l'agroalimentaire, ou le domaine de la santé, comme précédemment évoqué,

Les inventeurs ont conçu un transducteur, pouvant être mis en œuvre soit pour des applications liées à la détection photoacoustique, soit pour des applications liées à la détection photothermique. Il permet d'obtenir des dispositifs dédiés à chaque application, présentant une sensibilité de détection élevée, et de conception simple.

## EXPOSE DE L'INVENTION

Un premier objet de l'invention est un dispositif de détection selon la revendication 1.

Le dispositif peut comporter une unité de traitement, reliée au circuit d'asservissement, et configurée pour :

- estimer une amplitude de la modulation temporelle de la longueur d'onde de résonance;
- détecter la présence de l'analyte dans le milieu en fonction de l'amplitude estimée.

L'unité de traitement peut être configurée pour estimer une concentration de l'analyte dans le milieu en fonction de l'amplitude estimée.

Selon un mode de réalisation, dit photoacoustique, le dispositif comporte une cavité creuse, débouchant sur l'ouverture, le transducteur étant relié à la cavité creuse. Le transducteur est un transducteur acoustique, configuré pour détecter une amplitude d'une onde photoacoustique se propageant depuis l'ouverture, à travers la cavité creuse, de telle sorte que sous l'effet de l'illumination du milieu par l'onde lumineuse d'excitation, la membrane vibre selon la fréquence d'excitation, entraînant la modulation temporelle de la longueur d'onde de résonance, à une fréquence de modulation égale à la fréquence d'excitation.

La membrane peut s'étendre parallèlement à la face de contact. La membrane peut délimiter une partie de la cavité creuse.

Selon un mode de réalisation, dit photothermique, le dispositif est tel que :

- la membrane du transducteur forme la face de contact du dispositif, destinée à être appliquée au contact du milieu ;
- l'ouverture s'étend à travers la membrane;
- le transducteur est un transducteur thermique, de telle sorte que sous l'effet de l'illumination du milieu par l'onde lumineuse d'excitation, la température de la membrane suit une variation temporelle périodique, entraînant la modulation temporelle périodique de la longueur d'onde de résonance.

Quel que soit le mode de réalisation, au moins un réflecteur, ou chaque réflecteur, est un miroir de Bragg, formé par une modulation périodique d'un indice de réfraction le long du guide d'onde.

Le circuit d'asservissement peut notamment mettre en œuvre un asservissement de type Pound-Drever-Hall.

Quel que soit le mode de réalisation, le dispositif peut être tel que :

- le premier réflecteur est un premier miroir de Bragg ;
- le deuxième réflecteur est un deuxième miroir de Bragg ;
- le premier miroir de Bragg et le deuxième miroir de Bragg forment un même miroir de Bragg comportant un défaut, le premier miroir de Bragg et le deuxième miroir de Bragg correspondant aux parties du miroir de Bragg s'étendant respectivement de part et d'autre du défaut.

Dans le mode de réalisation photoacoustique, le dispositif peut être tel que :

- la membrane présente, sous l'effet de la vibration, au moins un ventre de vibration l'amplitude de vibration étant maximale au niveau de chaque ventre de vibration ;
- le guide d'onde s'étend au niveau d'au moins un ventre de vibration.

Le guide d'onde est formé directement sur la membrane. Le premier réflecteur et le deuxième réflecteur peuvent être obtenus par inscription du guide d'onde par un faisceau laser, de façon à obtenir une modulation périodique de l'indice de réfraction dans le guide d'onde.

Un deuxième objet de l'invention est un procédé , selon la revendication 12, de détection d'un analyte dans un milieu, l'analyte absorbant la lumière selon au moins une longueur d'onde d'absorption, le procédé comportant les étapes suivantes :

a) application d'un dispositif selon le premier objet de l'invention contre le milieu, de telle sorte que la face de contact du dispositif soit maintenue contre le milieu ;

b) activation de la source de lumière d'excitation, la source de lumière d'excitation émettant une onde lumineuse d'excitation, impulsionnelle ou modulée en amplitude, selon une fréquence d'excitation, dans une longueur d'onde correspondant à une longueur d'onde d'absorption de l'analyte ;

c) détermination, par le circuit d'asservissement, d'une modulation périodique d'une longueur d'onde de résonance du guide d'onde du transducteur, à une fréquence de modulation correspondant à la fréquence d'excitation, la longueur d'onde de résonance correspondant à un pic de transmission du guide d'onde ;

d) en fonction de la modulation périodique déterminée par le circuit d'asservissement, détection de la présence de l'analyte dans le milieu.

Le dispositif peut être tel que décrit en lien avec le mode de réalisation photoacoustique. Le procédé peut alors comporter :

- suite à l'étape b), un échauffement périodique du milieu, selon la fréquence d'excitation, entraînant une émission d'une onde photoacoustique, se propageant à travers la cavité creuse, sous l'effet de laquelle la membrane du transducteur vibre à la fréquence d'excitation, de telle sorte que la fréquence de résonance du guide d'onde du transducteur est modulée selon une fréquence de modulation égale à la fréquence d'excitation ;

- lors de l'étape d) :

  • une estimation d'une amplitude de la modulation périodique de la longueur d'onde de résonance, à la fréquence de modulation;
  • une détection de la présence d'analyte en fonction de l'amplitude estimée.

Le dispositif peut être tel que décrit en lien avec le mode de réalisation photothermique. Le procédé peut alors comporter :

- suite à l'étape b), un échauffement périodique du milieu, selon la fréquence d'excitation, entraînant un échauffement périodique de la membrane à la fréquence d'excitation, de telle sorte que la fréquence de résonance du guide d'onde du transducteur est modulée selon une fréquence de modulation correspondant à la fréquence d'excitation;
- lors de l'étape d) :

  • une estimation d'une amplitude de la modulation périodique de la longueur d'onde de résonance à la fréquence de modulation;
  • une détection de la présence d'analyte en fonction de l'amplitude estimée.

Quel que soit le mode de réalisation, l'étape d) peut également comporter une estimation d'une concentration de l'analyte dans le milieu analysé.

L'invention sera mieux comprise à la lecture de l'exposé des exemples de réalisation présentés, dans la suite de la description, en lien avec les figures listées ci-dessous.

**FIGURES**

Les figures 1A à 1E schématisent les principaux composants d'un dispositif selon un mode de réalisation, dit mode de réalisation photoacoustique.

La figure 2A montre une fibre optique microstructurée, formant un miroir de Bragg.

La figure 2B représente une bande spectrale de réflexion de la fibre optique schématisée sur la figure 2A.

La figure 2C montre une fibre optique microstructurée, formant une cavité optique résonante basée sur deux miroirs de Bragg espacés l'un de l'autre.

La figure 2D représente une bande spectrale de réflexion de la fibre optique schématisée sur la figure 2C.

La figure 3A montre un guide d'onde, comportant une cavité optique résonante, non déformé.

La figure 3B montre un guide d'onde, comportant une cavité optique résonante, déformé.

La figure 3C montre un guide d'onde dont la déformation n'est pas homogène.

La figure 3D montre une évolution de la bande spectrale de réflexion d'un guide d'onde, tel que représenté sur la figure 3C, sous l'effet de déformations.

La figure 3E représente une amplitude de déformation d'une membrane, le long d'un diamètre de cette dernière.

La figure 3F montre un positionnement optimal d'un guide d'onde, compte tenu de la déformation représentée sur la figure 3D.

La figure 4A schématise un circuit mettant en œuvre un asservissement de la longueur d'onde de la source de lumière auxiliaire selon la méthode de verrouillage en longueur d'onde.

La figure 4B montre l'évolution d'une fonction d'erreur obtenue par une méthode de verrouillage en longueur d'onde.

La figure 5A illustre un décalage de la longueur d'onde de résonance d'une cavité optique résonante, sous l'effet d'une vibration de la membrane.

La figure 5B montre une modulation temporelle de la longueur d'onde de résonance optique.

La figure 5C schématise une estimation de l'amplitude de vibration d'une membrane à partir de la modulation temporelle de la longueur d'onde de résonance.

Les figures 6A à 6D montrent les principales étapes d'un procédé de fabrication permettant de former un guide d'onde microstructuré au contact d'une membrane.

La figure 7A montre les principales étapes d'un procédé de détection mettant en œuvre le dispositif selon le mode de réalisation photoacoustique.

La figure 7B montre les principales étapes d'un procédé de détection mettant en œuvre le dispositif selon le mode de réalisation photothermique.

Les figures 8A à 8C schématisent les principaux composants d'un dispositif selon un mode de réalisation, dit mode de réalisation photothermique.

**EXPOSE DE MODES DE REALISATION PARTICULIERS**

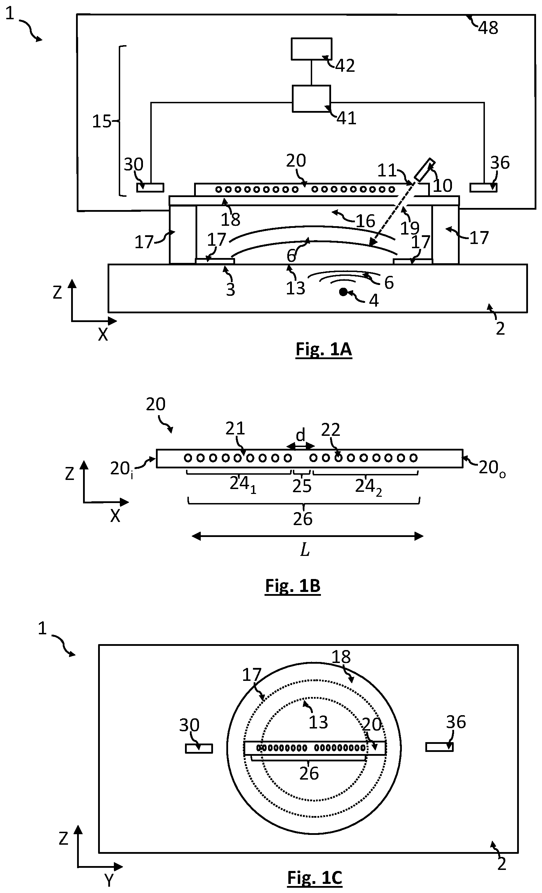

Les figures 1A à 1E illustrent un premier mode de réalisation dit photoacoustique, d'un dispositif 1 selon l'invention. Le dispositif 1 est configuré pour être appliqué contre un milieu 2 à analyser.

Le dispositif comporte une source de lumière d'excitation 10, configurée pour émettre une onde lumineuse d'excitation 11 se propageant jusqu'au milieu 2 à analyser. La source de lumière 10 est impulsionnelle ou modulée en amplitude, selon une fréquence d'excitation $f_{11}$. L'onde lumineuse 11 est émise dans une bande spectrale d'excitation $\Delta\lambda_{11}$ comportant une longueur d'onde d'absorption $\lambda_4$ d'un analyte 4 présent dans le milieu. Un objectif du dispositif 1 est de détecter la présence de l'analyte 4 et éventuellement d'en estimer une concentration.

La bande spectrale d'excitation s'étend de préférence dans le visible ou dans l'infra-rouge, par exemple entre des longueurs d'onde de 3 µm et de 15 µm. De préférence, la bande spectrale d'excitation $\Delta\lambda_{11}$ est suffisamment étroite, de façon que le dispositif 1 soit spécifique à un seul analyte. Par exemple, la largeur de la bande spectrale d'émission est de l'ordre de 1 cm$^{-1}$. Lorsque l'analyte est le glucose, la bande spectrale d'émission est centrée sur une longueur d'onde d'absorption du glucose, par exemple 1034 cm$^{-1}$. La source de lumière d'excitation 10 peut notamment être une source laser impulsionnelle, par exemple un laser accordable en longueur d'onde de type QCL (Quantum Cascade Laser). La bande spectrale d'émission $\Delta\lambda$ est alors située dans l'infra-rouge.

L'analyte 4 peut être une molécule présente dans le milieu analysé. Lorsque le milieu est un tissu biologique, il peut s'agir de glucose présent dans un fluide corporel du tissu biologique. Comme évoqué en lien avec l'art antérieur, l'analyte peut être une molécule gazeuse, le milieu étant un gaz. Il peut par exemple s'agir d'une molécule de gaz considérée comme polluante. Le milieu peut également être un liquide, l'analyte étant une molécule potentiellement présente dans le liquide.

Le dispositif 1 comporte une face de contact 3, destinée à être appliquée contre le milieu 2 à analyser, au contact de ce dernier. La face de contact 3 est conçue pour se conformer au milieu 2 contre laquelle elle est destinée à être appliquée. Elle est par exemple plane.

Le dispositif 1 comporte une enceinte 17, s'étendant à partir de la face de contact 3, et délimitant une cavité creuse 16. La cavité creuse 16 comporte une ouverture 13, ménagée dans la face de contact 3, de façon à déboucher sur le milieu 2. La source de lumière d'excitation 10 est configurée de telle sorte que l'onde lumineuse d'excitation 11, se propage jusqu'au milieu 2 à travers la cavité creuse 16, ainsi qu'à travers l'ouverture 13.

Sous l'effet de la présence d'un analyte 4 dans le milieu 2, une onde photoacoustique 6 est formée. L'onde photoacoustique 6 est une onde acoustique formée à partir d'un échauffement périodique du milieu par l'onde lumineuse incidente 11, cette dernière étant modulée en amplitude à la fréquence d'excitation $f_{11}$. Une partie de l'onde photoacoustique 6 se propage à travers la cavité creuse 16 de façon à être détectée par un transducteur 15.

Dans le mode de réalisation photoacoustique, le transducteur 15 est un transducteur acoustique. Sa fonction est de mesurer une amplitude et/ou fréquence de l'onde photoacoustique 6. Plus précisément, dans l'application visée, le transducteur 15 permet une estimation d'une amplitude de l'onde photoacoustique 6 à la fréquence d'excitation $f_{11}$ de l'onde lumineuse d'excitation.

Le transducteur 15 comporte une membrane 18 souple, configuré pour vibrer lorsqu'elle est exposée à l'onde photoacoustique 6. La membrane 18 s'étend de préférence parallèlement un plan radial $P_{XY}$. Le diamètre de la membrane, ou sa plus grande diagonale, est compris entre 1 mm et 10 mm. L'épaisseur de la membrane, parallèlement à un axe transversal Z, perpendiculaire au plan radial, est de préférence comprise entre 10 µm et 500 µm, et de préférence entre 10 µm et 100 µm. L'épaisseur de la membrane est de préférence comprise entre 1/10 et 1/200 du rayon de la membrane (ou de sa demi-diagonale la plus grande).

La source de lumière d'excitation 10 est configurée de telle sorte que l'onde lumineuse d'excitation 11, se propage jusqu'au milieu 2 à travers à travers la cavité creuse 16. Dans l'exemple représenté sur la figure 1A, l'onde lumineuse d'excitation 11 se propage à travers une ouverture secondaire 19 pratiquée à travers la membrane 18.

L'ouverture secondaire 19 pratiquée dans la membrane peut également permettre d'établir un équilibre de la pression de part et d'autre de la membrane 18, à basse fréquence. Cela permet d'éviter une éventuelle déformation de la membrane 18 sous l'effet d'une variation de la pression basse fréquence de part et d'autre de la membrane 18. Par variation de pression basse fréquence, on entend une différence de pression se produisant à une fréquence inférieure à une plage de fonctionnement fréquentielle de la membrane. Le diamètre de l'ouverture secondaire 19 est par exemple inférieur au dixième du diamètre de la membrane. Il est par exemple de l'ordre de 10 µm ou 20 µm.

La transducteur 15 comporte un guide d'onde 20 qui s'étend sur la membrane 18, au contact de cette dernière et parallèlement à cette dernière. Le guide d'onde s'étend entre une entrée $20_i$ et une sortie $20_o$. Le guide d'onde est élaboré à partir d'un premier matériau 21 d'un premier indice de réfraction $n_1$.

Hors de la portée de la présente invention, le guide d'onde 20 peut être une fibre optique, auquel cas le premier matériau est le cœur de la fibre optique. Selon l'invention, il s'agit d'un guide d'onde formé à partir du dépôt d'une couche mince du premier matériau 21, par exemple SiON (oxynitrutre de Silicium), ce qui correspond à l'exemple représenté sur les figures 1A à 1E. Le guide d'onde est délimité par un matériau de confinement 23, dont l'indice de réfraction est inférieur à l'indice de réfraction $n_3$ du premier matériau $n_1$. Lorsque le guide d'onde 20 est une fibre optique, le matériau de confinement 23 est la gaine de la fibre optique.

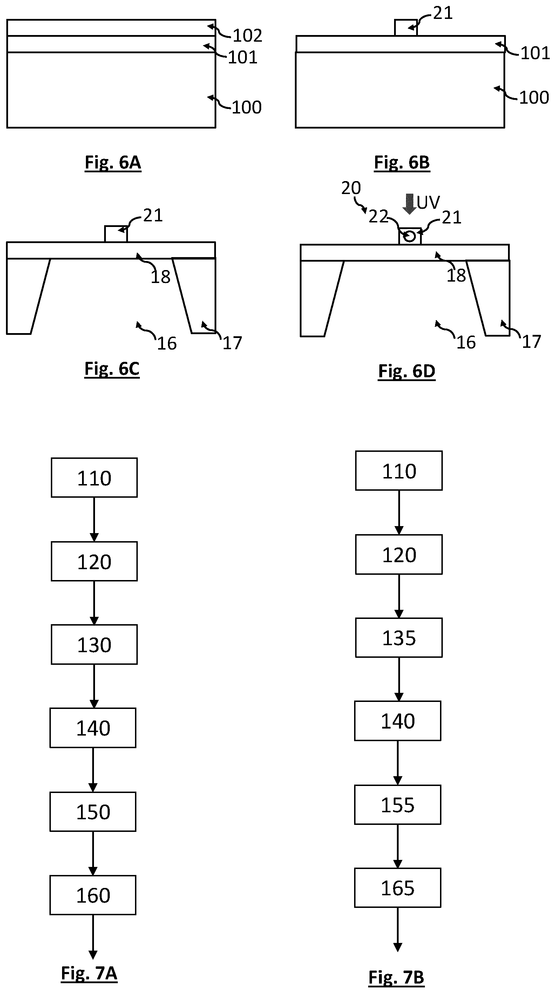

Le guide d'onde 20 est formé à partir d'une couche mince du premier matériau 21, le matériau de confinement 23 peut simplement être l'air entourant le premier matériau. L'épaisseur du guide d'onde, selon l'axe transversal Z, est de préférence inférieure à 10 µm ou à 5 µm. Le procédé de formation d'un tel guide d'onde est décrit en lien avec les figures6A à 6D. Le fait de former un guide d'onde directement sur la membrane permet d'éviter une étape de collage de la fibre optique sur la membrane. Un autre avantage, par rapport à l'utilisation d'une fibre optique, est que cela permet d'obtenir un guide d'onde moins rigide. Quelle que soit la configuration retenue, l'indice de réfraction $n_3$ du matériau de confinement 23 est inférieur à l'indice de réfraction $n_1$ du premier matériau 21. Lorsque le premier matériau 21 est directement déposé sur la membrane 18, il est préférable que l'indice de réfraction $n_1$ du premier matériau 21 soit supérieur à l'indice optique du matériau formant la membrane 18. Un exemple de guide d'onde 20 est détaillé sur la figure 1B. Dans cet exemple, le premier matériau 21 est déposé sur la membrane 18. Le guide d'onde comporte des portions d'un deuxième matériau 22, d'un deuxième indice de réfraction $n_2$, périodiquement réparties le long du guide d'onde 20. Le deuxième indice de réfraction $n_2$ est différent du premier indice de réfraction $n_1$. Il peut être supérieur au premier indice de réfraction $n_1$. La variation relative entre le premier indice de réfraction et le deuxième indice de réfraction peut varier entre 0.01% ($10^{-4}$) à 0.1% ($10^{-3}$).

Le long de l'axe défini par le guide d'onde, l'indice de réfraction est périodiquement modulé, entre $n_1$ et $n_2$, de façon à former un miroir de Bragg dans une bande spectrale de réflexion $\Delta\lambda_{20}$. La structure d'un miroir de Bragg est connue de l'homme du métier. Il s'agit d'une structure selon laquelle l'indice de réfraction varie périodiquement, de telle sorte que le long de l'axe selon lequel se propage la lumière, le miroir est formé par une alternance de portions de deux indices différents, l'épaisseur optique de chaque portion étant de $\lambda_B/4n_i$, où $\lambda_B$ est une longueur d'onde centrale de la bande spectrale de réflexion $\Delta\lambda_{20}$ et $n_i$ est l'indice de réfraction du matériau considéré ($n_i = n_1$ ou $n_i = n_2$). Plus le contraste d'indice de réfraction est faible, plus le nombre de périodes est élevé.

La bande spectrale de réflexion $\Delta\lambda_{20}$ est centrée sur une longueur d'onde de résonance $\lambda_r$. Cette dernière est telle que :

$$\lambda_r = \lambda_B = 2n_{eff}\Lambda \, (1)$$

où

- $n_{eff}$ est un indice effectif du réseau, tel que

$$n_{eff} = \frac{n_1 + n_2}{2} \quad (2)$$

- $\Lambda$ est la période spatiale du réseau, c'est-à-dire la longueur de deux portions 21 et 22 successives selon l'axe du guide d'onde.

Le guide d'onde 20 est tel que le miroir de Bragg, formé par l'alternance des portions 21 et 22, comporte un défaut. Par défaut, on entend une rupture localisée de la périodicité de la modulation d'indice de réfraction. Le défaut correspond par exemple à un espace continu 25, formé par un même matériau, par exemple le premier matériau 21, le long d'une période $\Lambda$ ou le long de plusieurs périodes successives. Au niveau du défaut, le guide d'onde comporte un même matériau, s'étendant selon une distance d le long de l'axe du guide d'onde 20. Lorsque la distance d est telle que

$$d = \frac{k\lambda_B}{n_{eff}}(1'),$$

où k est un entier naturel positif, une cavité optique résonante 26 de type Fabry-Perot est formée, définissant une longueur d'onde de résonance $\lambda_r$. Lorsque le défaut s'étend sur une seule période $\Lambda$, $\lambda_r = \lambda_B$

Lorsque $d > k\lambda_B/n_{eff}$, d'autres longueurs d'onde de résonance $\lambda_r$ peuvent apparaître, dans la bande spectrale de réflexion $\Delta\lambda_{20}$, les longueurs d'onde de résonance étant différentes de la longueur d'onde de Bragg $\lambda_B$. Dans un tel cas, on retient de préférence la longueur d'onde de résonance à laquelle le pic de résonance est le plus fin.

Ainsi, le défaut permet de séparer, dans le guide d'onde 20, un premier miroir de Bragg $24_1$ et un deuxième miroir de Bragg $24_2$. L'ensemble formé par le premier miroir de Bragg $24_1$, le deuxième miroir de Bragg $24_2$, et l'espace 25 entre les miroirs de Bragg forme la cavité résonante 26.

Le guide d'onde 20 est alors structuré pour :

- réfléchir la lumière dans la bande spectrale de réflexion $\Delta\lambda_{20}$ des miroirs de Bragg $24_1$, $24_2$, en dehors de la longueur d'onde de résonance $\lambda_r$ ;
- transmettre la lumière dans la longueur d'onde de résonance $\lambda_r$ de la cavité résonante 26.

Le transducteur 15 comporte également une source de lumière auxiliaire 30, en particulier une diode laser, agencée pour émettre une onde lumineuse auxiliaire 32 vers l'entrée $20_i$ du guide d'onde 20. L'onde lumineuse auxiliaire 32 est émise dans une bande spectrale d'émission $\Delta\lambda_{32}$, centrée sur une longueur d'onde d'émission $\lambda_{32}$. La bande spectrale d'émission $\Delta\lambda_{32}$ est de préférence incluse dans la bande spectrale de réflexion $\Delta\lambda_{20}$.

De préférence, la largeur de la bande spectrale d'émission $\Delta\lambda_{32}$ est plus étroite que celle de la bande spectrale de réflexion $\Delta\lambda_{20}$. Par exemple, la largeur de la bande spectrale d'émission $\Delta\lambda_{32}$ peut être de 1 nm, voire inférieure à 500 pm ou à 100 pm. Par largeur de la bande spectrale d'émission $\Delta\lambda_{32}$, on entend une largeur à mi-hauteur de la bande spectrale d'émission.

La source de lumière auxiliaire 30 est de préférence un laser continu. Il peut par exemple s'agir d'une diode laser de type DFB (acronyme de Distributed Feedback), de puissance 1 mW, émettant à la longueur d'onde de 1.55 $\mu$m, de largeur spectrale de l'ordre du pm. Ce type de diode laser est d'usage courant dans le domaine des télecommunications.

Le transducteur 15 comporte un photodétecteur 36, de préférence un photodétecteur rapide, de type photodiode. Le photodétecteur présente une bande spectrale de détection $\Delta\lambda_{36}$ qui comprend la bande spectrale de réflexion $\Delta\lambda_{20}$.

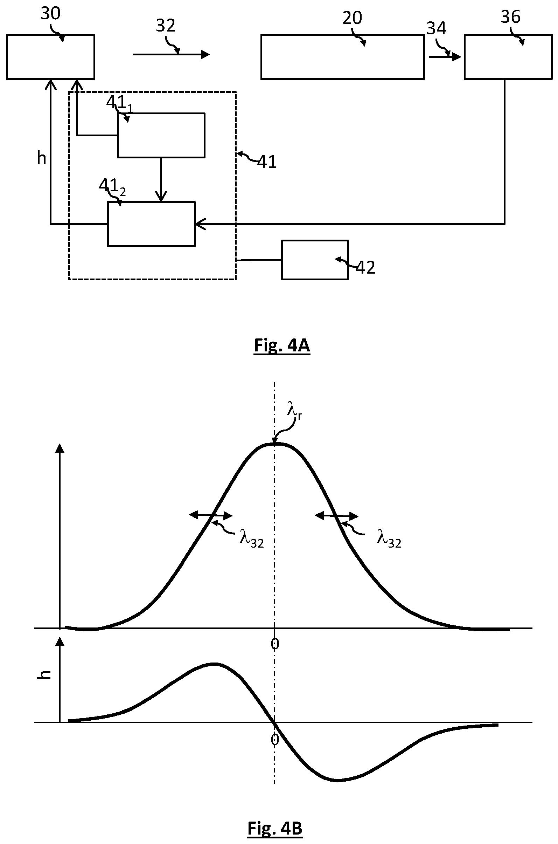

Le transducteur 15 comporte un circuit d'asservissement 41, configuré pour suivre une modulation temporelle $\lambda_r(t)$ de la longueur d'onde de résonance $\lambda_r$ de la cavité résonante 26. Un tel circuit est décrit par la suite, en lien avec les figures 4A et 4B. Le circuit d'asservissement 41 permet un asservissement de la source de lumière auxiliaire 30, de telle sorte que la longueur d'onde d'émission $\lambda_{32}$ de l'onde lumineuse auxiliaire 32 émise par la source de lumière auxiliaire corresponde à la longueur d'onde de résonance $\lambda_r$ de la cavité résonante 26.

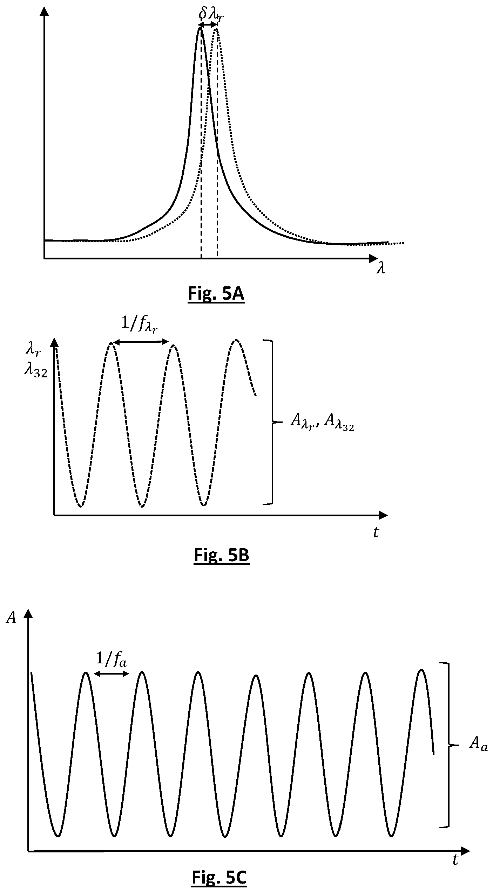

Le dispositif comporte ou est relié à une unité de traitement 42, configurée pour calculer une fréquence $f_{\lambda_r}$ ou une amplitude $A_{\lambda_r}$ de la modulation temporelle $\lambda_r(t)$ déterminée par le circuit d'asservissement 41. L'unité de traitement 42 est par exemple conçue ou programmée pour estimer une amplitude de modulation de la longueur d'onde de résonance, à une fréquence $f_{\lambda_r}$ correspondant à la fréquence d'excitation $f_{11}$ de l'onde lumineuse d'excitation 11. Le fonctionnement de l'unité de traitement 42 est décrit plus en détail en lien avec les figures 5A à 5C.

Le dispositif comporte un capot 48, délimitant un volume arrière, le volume arrière correspondant au volume s'étendant entre la membrane 18 et le capot 48.

D'une façon générale, le guide d'onde 20 comporte une cavité résonante 26, formée à partir d'un premier réflecteur $24_1$ et d'un deuxième réflecteur $24_2$, ces derniers étant obtenus par microstructuration du guide d'onde 20. Dans les exemples donnés dans cette description, le premier réflecteur $24_1$ et le deuxième réflecteur $24_2$ sont des miroirs de Bragg, mais d'autres types de microstructures sont envisageables.

Un point important de l'invention, explicité par la suite, repose sur le fait que :

- lorsque la source de lumière auxiliaire 30 est activée, et émet une onde lumineuse 32 dont la longueur d'onde d'émission $\lambda_{32}$ n'est pas accordée avec la longueur d'onde de résonance $\lambda_r$ du guide d'onde 20 (ou plus précisément de la cavité résonante 26), le guide d'onde 20 réfléchit une onde réfléchie 32' ;
- lorsque la source de lumière auxiliaire 30 est activée, et émet une onde lumineuse 32 dont la longueur d'onde d'émission $\lambda_{32}$ correspond à la longueur d'onde de résonance $\lambda_r$ de la cavité résonante 26, le guide d'onde 20 transmet une onde transmise 34 vers le photodétecteur 36. Plus la longueur d'onde d'émission $\lambda_{32}$ est proche de la longueur d'onde de résonance $\lambda_r$, plus l'intensité de l'onde transmise 34 est importante.

L'invention est basée sur le fait qu'en étant exposée à une onde acoustique 6, de fréquence acoustique $f_a$, la membrane 18 vibre selon une amplitude de vibration $A_a$ à la fréquence $f_a$ de l'onde photoacoustique 6. Il en résulte une déformation périodique du guide d'onde 20, sous l'effet de laquelle la longueur d'onde de résonance $\lambda_r$ suit une modulation temporelle périodique $\lambda_r(t)$. L'amplitude $A_{\lambda_r}$ de la modulation temporelle de la longueur d'onde de résonance dépend de l'amplitude de vibration de la membrane, cette dernière étant proportionnelle à l'amplitude acoustique $A_a$. La fréquence $f_{\lambda_r}$ de la modulation temporelle correspond à la fréquence acoustique $f_a$, qui correspond également à la fréquence d'excitation $f_{11}$. En calculant l'amplitude de la modulation $A_{\lambda_r}$ à la fréquence $f_{\lambda_r}$, le dispositif permet de détecter la présence de l'analyte dans le milieu, et éventuellement d'en estimer une concentration, comme décrit en lien avec les figures 5A à 5C.

La figure 1C montre une vue de certains éléments décrits en lien avec la figure 1A, dans le plan radial $P_{XY}$. Dans cet exemple, la membrane 18 prend une forme de disque de faible épaisseur, l'épaisseur étant le centième du rayon.

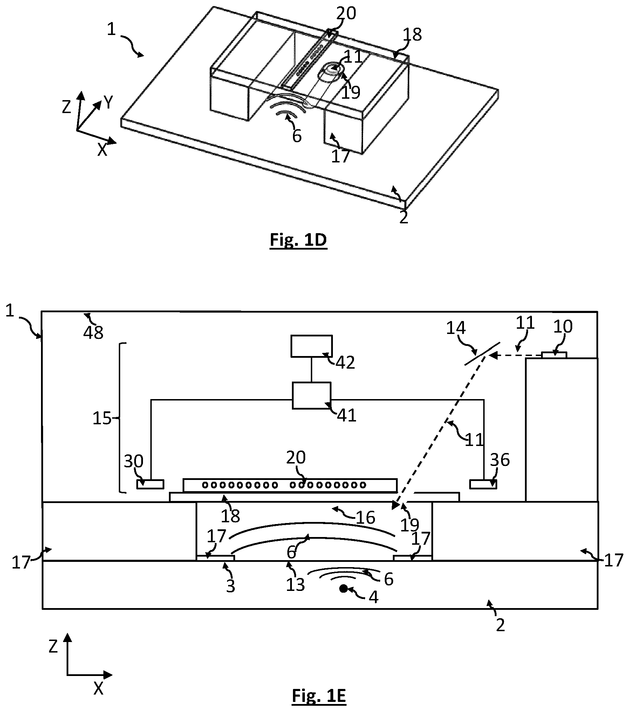

La figure 1D est une vue 3D représentant la position de la membrane 18 et du guide d'onde 20 par rapport au milieu analysé 2.

La figure 1E montre un exemple de dispositif dans lequel la source de lumière d'excitation 10 est associée à un réflecteur 14. L'onde lumineuse d'excitation 11 est émise parallèlement au plan radial $P_{XY}$, puis est réfléchie, par le réflecteur 14, vers l'ouverture 13, de façon à se propager vers le milieu 2. La source de lumière auxiliaire 30 et le photodétecteur 36 sont alignés par rapport au guide d'onde 20. De façon alternative, la source de lumière auxiliaire 30 et/ou le photodétecteur 36 peuvent être couplés au guide d'onde 20 par un cristal photonique.

Selon une variante, la membrane 18 du transducteur 15 est reliée à la cavité 16 par un canal acoustique, ce dernier transmettant une partie de l'onde photoacoustique 6 vers la membrane 18.

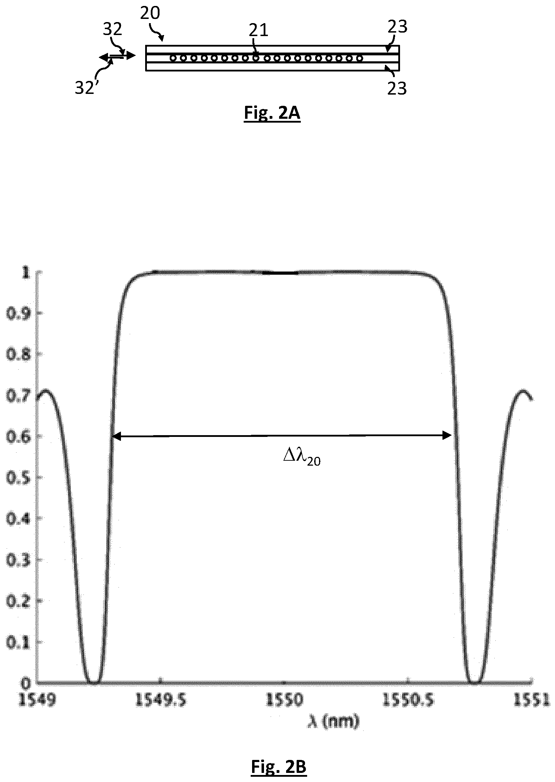

Hors de la portée de la présente invention, la figure 2A illustre un mode de réalisation selon lequel guide d'onde 20 est une fibre optique microstructrée, à l'intérieur de laquelle est formé un réseau de Bragg. Ce type de microstructuration, dans une fibre optique, est usuellement désigné par le terme "Fiber Bragg Grating". La fibre optique comporte un premier matériau 21 composant le cœur et un matériau de confinement 23 formant la gaine. Dans le cœur de la fibre optique sont formées des inclusions ou cavités d'un deuxième matériau 22, dont l'indice de réfraction est différent de celui du premier matériau. La figure 2B montre un spectre de réflexion de la fibre optique ainsi microstructurée. Le spectre de réflexion correspond à une intensité réfléchie normalisée par l'intensité d'illumination (axe des ordonnées) en fonction de la longueur d'onde (axe des abscisses - unité nm). La réflexion est maximale dans la bande spectrale de réflexion $\Delta\lambda_{20}$. Ainsi, lorsqu'un tel guide d'onde est illuminé par une onde lumineuse 32, dans la bande spectrale de réflexion $\Delta\lambda_{20}$, il réfléchit une onde lumineuse 32', dans toute la bande spectrale de réflexion $\Delta\lambda_{20}$.

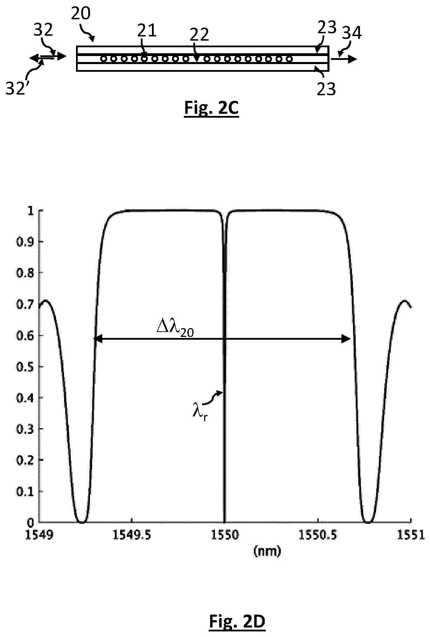

La figure 2C illustre une fibre optique similaire, dans lequel deux miroirs de Bragg $24_1$ et $24_2$ sont séparés par un espace 25 rempli du premier matériau 21, comme décrit en lien avec la figure 1B. Lorsque la longueur de l'espace 25 correspond à $\dfrac{k}{n_{eff}}$ fois une longueur d'onde de résonance, comprise dans la bande spectrale de réflexion, la fibre optique comporte une cavité résonante 26.

La figure 2D montre un spectre de réflexion de la fibre optique ainsi microstructurée. La réflexion est maximale selon la bande spectrale de réflexion $\Delta\lambda_{20}$, à l'exception de la longueur d'onde de résonance $\lambda_r$. Ainsi, lorsqu'un tel guide d'onde est illuminé par une onde lumineuse 32, émise par la source de lumière auxiliaire 30, dans la bande spectrale de réflexion $\Delta\lambda_{20}$, il réfléchit une onde lumineuse 32', si la longueur d'onde $\lambda_{32}$ est différente de la longueur d'onde de résonance, et transmet une onde lumineuse 34, dite onde lumineuse transmise, lorsque la longueur d'onde $\lambda_{32}$ se situe dans le pic de résonance.

Les figures 2C et 2D sont issues de modélisations, calculées par un logiciel de calcul de type Matlab (marque déposée - Mathworks), en considérant une structuration s'étendant selon une longueur L de 3 mm, le contraste d'indice entre les premier et deuxième matériaux étant de $10^{-3}$, la période de chaque miroir de Bragg étant de 0,5 $\mu$m environ. Ainsi, chaque miroir de Bragg comporte un nombre de périodes égal à 3000.

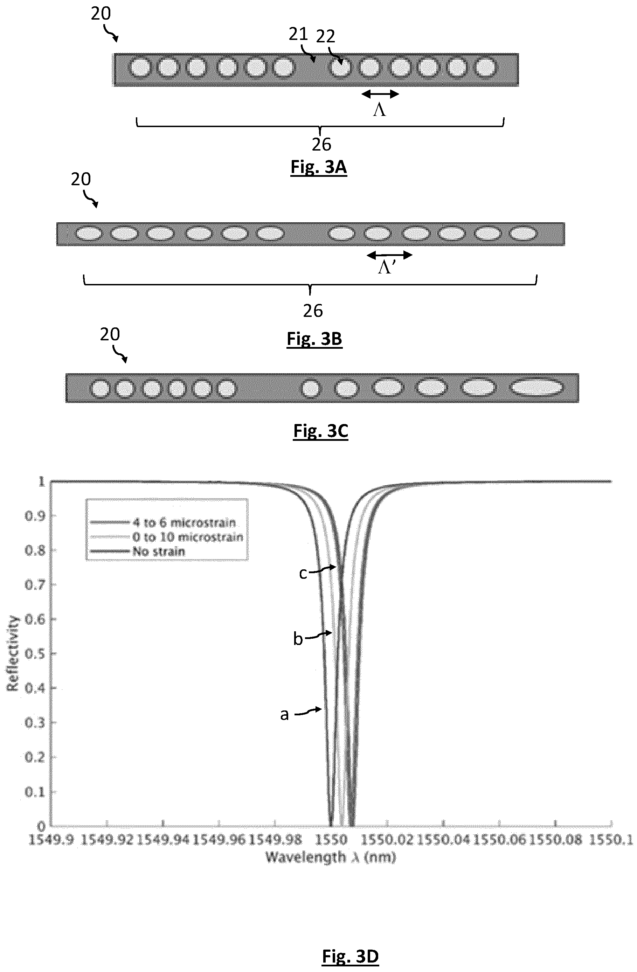

Les figures 3A à 3C illustrent la variation de la longueur d'onde de résonance $\lambda_r$ résultant d'une déformation d'un guide d'onde 20 tel que décrit sur les figures 1B ou 2C. Les figures 3A et 3B montrent le guide d'onde 20 respectivement non déformé et déformé. Sous l'effet de la déformation, la période spatiale de la modulation d'indice varie de A à A' = A + dA. L'application de l'expression (1) résulte en un décalage $d\lambda_B$ de la longueur d'onde de Bragg $\lambda_B$, autour de laquelle s'étend la bande spectrale de réflexion $\Delta\lambda$. Le décalage $d\lambda_B$ est tel que :

$$\frac{1}{\lambda_B} \times \frac{\partial \lambda_B}{\partial \varepsilon} = 0.78 \times 10^{-6} \ \ \mu\varepsilon^{-1} \quad (3),$$

où :

- $\varepsilon$ correspond à la déformation, exprimée en $\mu\varepsilon$ (microstrain), correspondant à $10^{-4}$ %. La déformation $\varepsilon$ est une variation normalisée de la longueur, de telle sorte que:

$$\varepsilon = \frac{d\Lambda}{\Lambda} \times 10^{-2} \quad (4)$$

- $\times$ est l'opérateur multiplication.

L'expression (3) a été obtenue en considérant que lorsque la membrane 18 est constituée de $SiO_2$, et le saut d'indice entre le premier matériau et le deuxième matériau est de $10^{-3}$. Elle se base sur une déformation homogène de chaque miroir de Bragg, comme représenté sur la figure 3B. D'après l'expression (3), pour une déformation de 1 microstrain, le décalage $d\lambda_B$ de la longueur d'onde de Bragg $\lambda_B$ est de 1.2 pm.

Sur la figure 3C, on a représenté une déformation non uniforme du guide d'onde 20, certaines portions des miroirs de Bragg étant moins déformées que d'autres.

La figure 3D est une modélisation montrant l'évolution du spectre de réflexion d'un miroir de Bragg, dans une configuration telle que décrite en lien avec la figure 3C. Les courbes a, b et c correspondent respectivement à une absence de déformation, à une déformation de 0 à 10 microstrain ainsi qu'une déformation comprise entre 4 à 6 microstrain. Le décalage spectral est faible, inférieur à 10 pm. Les courbes b et c correspondent à une même déformation moyenne du guide d'onde, égale à 5 microstrain. Le décalage des longueurs d'onde de résonance entre ces deux configurations est dû à la variation de déformation le long de l'axe du guide d'onde, respectivement dans la plage 0-10 microstrain et 4-6 microstrain. Plus la déformation est homogène, plus le décalage spectral de la longueur d'onde de résonance, sous l'effet de la déformation, est important.

De préférence, le guide d'onde 20 s'étend sur les parties de la membrane 18 soumises à une déformation la plus importante. La membrane 18 comporte un ou plusieurs ventres de vibration, au niveau duquel ou desquels l'amplitude de vibration est maximale. Chaque ventre peut être déterminé par modélisation et/ou expérimentalement. De préférence, le guide d'onde 20 s'étend sur au moins un ventre de vibration de la membrane. Cela maximise la déformation du guide d'onde 20, ce qui augmente d'autant plus le décalage spectral résultant de la déformation. On obtient ainsi une meilleure sensibilité.

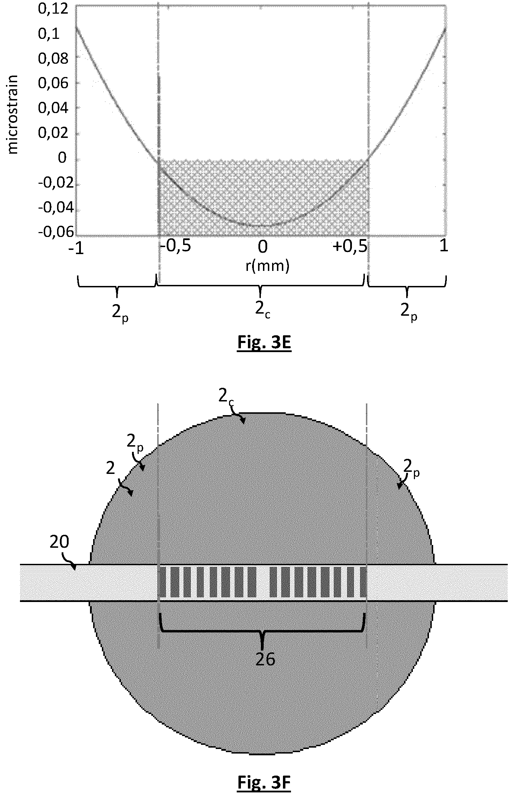

Les inventeurs ont modélisé une déformation d'une membrane 18, telle que schématisée sur les figures 1A et 1D. La membrane modélisée était en $SiO_2$, de rayon 1 mm et d'épaisseur 10 $\mu$m, soumise à une pression de 1 Pa. La déformation de la membrane, le long d'un de ses diamètres, est représentée sur la figure 3E, l'axe des abscisses correspondant à la distance par rapport au centre de la membrane (en mm) et l'axe des ordonnées correspondant à la déformation, en microstrain. La cavité résonante 26 est de préférence disposée au niveau de l'amplitude maximale de déformation, c'est-à-dire au centre de la membrane 18. La simulation illustrée sur la figure 3E montre qu'avec cette membrane, l'application d'une pression de 1 Pa induit une déformation de quelques $10^{-2}$ microstrain.

Sur la figure 3E, la déformation de la membrane est négative dans la partie centrale $2_c$ et positive dans la partie périphérique $2_p$. La cavité résonante 26 est avantageusement placée sur une portion de la membrane 2 dans laquelle sous l'effet de la vibration de la membrane, la déformation est de même signe, qu'il s'agisse d'une compression ou d'une dilatation.

Sur la figure 3F, on a schématisé un guide d'onde 20 dont la cavité résonante 26 est positionnée sur la partie centrale $2_c$ de la membrane 2, de part et d'autre du centre de la membrane, selon une distance de $\pm 0.5$ mm par rapport au centre. Sous l'effet de la vibration de la membrane, la déformation est alternativement négative ($\varepsilon < 0$), comme représenté sur la figure 3E, puis positive. Lorsque la déformation est négative, la cavité optique est comprimée : les portions du deuxième matériau 22 se rapprochent les unes des autres. Lorsque la déformation est positive, la cavité optique est dilatée : les portions du deuxième matériau 22 s'éloignent les unes des autres.

Les figures 4A et 4B schématisent le fonctionnement du circuit d'asservissement 41, dont la fonction est d'asservir la longueur d'onde $\lambda_{32}$ à la longueur d'onde de résonance $\lambda_r$ de la cavité résonante 26 formée dans le guide 20. Le circuit d'asservissement 41 effectue un verrouillage de la longueur d'onde $\lambda_{32}$ par rapport à la longueur d'onde de résonance $\lambda_r$. Le verrouillage en longueur d'onde est usuellement désigné par le terme anglosaxon "top of fringe locking". Il s'agit d'un circuit de type Pound-Drever-Hall, un tel circuit étant par exemple décrit dans la publication Chow J.H."Phase-sensitive interrogation of fiber Bragg grating resonators for sensing applications", J. Light. Technol., vol. 23, n°5, p. 1881-1889, May 2005, ou encore dans la publication Black E. "An introduction to Pound-Drever-Hall laser frequency stabilization", Am. J. Phys. 69 (1), January 2001.

Le circuit d'asservissement 41 comporte un modulateur $41_1$, pour moduler la longueur d'onde $\lambda_{32}$ de l'onde lumineuse auxiliaire 32 émise par la source de lumière auxiliaire 30, selon une fréquence de modulation pouvant varier de 10 kHz à plusieurs centaines de MHz. La fréquence de modulation de la longueur d'onde d'émission $\lambda_{32}$ est largement supérieure à la fréquence acoustique maximale adressée par le dispositif. Elle peut par exemple être supérieure à 10 fois la fréquence acoustique maximale adressée par le dispositif. L'intensité de l'onde lumineuse 34, émergeant du guide d'onde 20 et détectée par le photodétecteur 36, est transmise au circuit d'asservissement 41, ce dernier mesurant une fonction h traduisant une variation l'intensité détectée par le photodétecteur 36 par rapport à la modulation en longueur d'onde.

En fonction du signe de la fonction h, un signal d'erreur est adressé à la source de lumière, de façon à augmenter ou diminuer la longueur d'onde d'émission $\lambda_{32}$. Par exemple, lorsque l'évolution de l'intensité détectée par rapport à une augmentation de la longueur d'onde est négative, la longueur d'onde d'émission est progressivement diminuée. Lorsque l'évolution de l'intensité détectée par rapport à une augmentation en longueur d'onde est positive, la longueur d'onde d'émission est augmentée. Lorsque l'évolution de l'intensité détectée par rapport à la modulation est proche de zéro, la longueur d'onde d'émission correspond à la longueur d'onde de résonance du guide d'onde. Le circuit d'asservissement 41 utilise le fait que :

- lorsque $\lambda_{32} < \lambda_r$, une augmentation de la longueur d'onde $\lambda_{32}$ résulte en une augmentation de l'intensité de l'onde transmise 34. Inversement, une diminution de la longueur d'onde $\lambda_{32}$ résulte en une diminution de l'intensité de l'onde transmise 34 ;
- lorsque $\lambda_{32} > \lambda_r$, une augmentation de la longueur d'onde $\lambda_{32}$ résulte en une diminution de l'intensité de l'onde transmise 34. Inversement, une diminution de la longueur d'onde $\lambda_{32}$ résulte en une augmentation de l'intensité de l'onde transmise 34.

Ainsi, en effectuant une faible modulation de la longueur d'onde $\lambda_{32}$ de l'onde lumineuse auxiliaire 32, et en observant l'effet de la modulation sur l'intensité de l'onde lumineuse transmise 34, la source de lumière auxiliaire 30 peut être asservie, de façon que la longueur d'onde $\lambda_{32}$ de l'onde lumineuse auxiliaire 32 suive la longueur d'onde de résonance $\lambda_r$ du guide d'onde 20.

Le suivi de la longueur d'onde de résonance par verrouillage de la longueur d'onde permet d'obtenir un suivi de la longueur d'onde de résonance avec une sensibilité en longueur d'onde de l'ordre de $10^{-6}$ pm lorsque la fréquence acoustique est supérieure à 10 kHz, ou de de l'ordre de $10^{-3}$ pm lorsque la fréquence acoustique est inférieure à 1 kHz. Compte tenu de l'expression (3), il est estimé que cela permet une estimation de la déformation de la membrane de l'ordre de quelques picostrain, soit l'équivalent de quelques mPa en se basant sur une membrane formée de $SiO_2$. La méthode de Pound-Drever-Hall est donc adaptée, compte tenu des faibles décalages spectraux de la cavité résonante 26, ces derniers pouvant être de l'ordre de quelques pm.

Le suivi de la longueur d'onde de résonance par verrouillage de la longueur d'onde permet également d'être insensible à des fluctuations de longueur d'onde de résonance de la cavité 26 sous l'effet de la variation de paramètres environnementaux, de type variation de température ou d'humidité.

Les figures 5A à 5C illustrent le lien entre la variation temporelle périodique $\lambda_r(t)$ de la longueur d'onde de résonance $\lambda_r$, lorsque la membrane 18 vibre sous l'effet d'une onde photoacoustique 6, et l'amplitude de l'onde acoustique. Du fait de l'asservissement effectué par le circuit d'asservissement 41, la variation temporelle périodique de la longueur d'onde d'émission $\lambda_{32}$ (t) est considérée comme correspondant à la modulation temporelle de la longueur d'onde de résonance $\lambda_r(t)$ induite par la vibration de la membrane. Sur la figure 5A, on a schématisé un spectre de l'onde lumineuse transmise 34, et un décalage spectral $d\lambda_r$ sous l'effet de la déformation du guide d'onde 20. La figure 5B montre la modulation temporelle de la longueur d'onde

de résonance $\lambda_r$ résultant de la déformation du guide d'onde 20, la modulation étant périodique et de fréquence $f_{\lambda_r}$ correspondant à la fréquence acoustique $f_a$. Le circuit d'asservissement 41, en asservissant la longueur d'onde $\lambda_{32}$ à la longueur d'onde de résonance, permet de déterminer une telle modulation. Cette modulation est transmise à l'unité de traitement 42, cette dernière calculant une amplitude $A_{\lambda_r}$ de modulation de la longueur d'onde de résonance. A partir de cette dernière, l'unité de traitement 42 estime l'amplitude de vibration de la membrane, qui correspond à la fréquence acoustique $f_a$ de l'onde photoacoustique 6. A partir de l'amplitude de vibration de la membrane, à la fréquence acoustique $f_a$, on peut déterminer une présence de l'analyte 4 dans le milieu, ou estimer une concentration de l'analyte 4 dans le milieu.

L'estimation d'une concentration de l'analyte 4 dans le milieu peut supposer une calibration préalable, de façon à établir un lien :

- entre la concentration de l'analyte et l'amplitude de vibration de la membrane ;
- ou entre la concentration de l'analyte et l'amplitude de modulation de la longueur d'onde de résonance.

On observe que la détermination de l'amplitude acoustique $A_a$ ne suppose pas forcément une détermination de la valeur de la longueur d'onde de résonance, mais une détermination précise de l'amplitude de modulation $A_{\lambda_r}$.

Les figures 6A à 6D illustrent les principales étapes permettant de former un guide d'onde 20, non fibré, sur une membrane 18.

On dispose d'un substrat 100, par exemple en Si, sur lequel on a déposé une première couche 101, par exemple en $SiO_2$ (indice 1.44), d'épaisseur 4 $\mu$m, et une deuxième couche 102, par exemple en SiON (oxynitrure de silicium - indice 1.60), d'épaisseur 1 $\mu$m. Cf. figure 6A.

Le procédé comporte :

- une gravure de la deuxième couche 102, par photolithographie, de façon à former le guide d'onde 20. Cf. figure 6B. Dans cet exemple, SiON correspond au premier matériau 21 du guide d'onde.
- une gravure en face arrière du substrat 100, de façon à libérer une partie de la première couche 101, cette dernière formant la membrane 18 suspendue. Cette étape permet également de former l'enceinte 17, délimitant la cavité creuse 16. Cf. figure 6C.
- une insolation, usuellement désignée par le terme inscription, point par point, du guide d'onde 20 par impulsions laser femtoseconde, de façon à former des cavités d'un deuxième matériau 22. Cf. figure 6D. Sous l'effet de l'insolation au laser, le SiON subit une variation locale d'indice. Le SiON insolé correspond alors à un deuxième matériau 22, dont l'indice de réfraction $n_2$ est différent de celui du SiON non insolé. En effet, l'insolation génère des microbulles, ce qui induit une variation de l'indice de réfraction. Il en résulte une modulation de l'indice de réfraction de guide d'onde 20, selon l'axe de propagation de la lumière, à l'intérieur du guide d'onde.

La durée de chaque impulsion est par exemple égale à 100 fs, à la longueur d'onde de 800 nm, l'énergie de chaque impulsion étant de 30 nJ. La fréquence d'impulsion peut être comprise entre quelques Hz et 200 kHz.

Une autre technique d'insolation est la photoinscription UV, décrite dans la publication Chow J.H."Phase-sensitive interrogation of fiberBragg grating resonators for sensing applications", J. Light. Technol., vol. 23, n°5, p. 1881-1889, May 2005. La photoinscription UV permet par exemple la microstructuration de fibres optiques.

Lors de l'insolation, la modulation de l'indice de réfraction est relativement faible, de l'ordre de $10^{-3}$. Cependant, l'inscription par laser femtoseconde permet la réalisation de miroirs de Bragg s'étendant selon des longueurs courtes, par exemple de l'ordre du mm. Ce type d'insolation permet d'obtenir une cavité résonante 26 de grande finesse, la largeur du pic de résonance étant inférieure à quelques dizaines de pm, voire inférieure à 10 pm, et pouvant être de l'ordre ou inférieure à 5 pm.

Il est possible d'augmenter la longueur selon laquelle s'étend chaque miroir de Bragg. Il en résulte une finesse du pic de résonance encore accrue.

Ainsi, lorsqu'on utilise le premier mode de réalisation photoacoustique, on peut détecter la présence d'un analyte, voire estimer sa concentration, dans un milieu analysé, en mettant en œuvre les étapes suivantes, représentées sur la figure 7A :

- Etape 110 : application du dispositif 1 sur le milieu, de telle sorte que la face de contact soit maintenue contre le milieu ;
- Etape 120 : activation de la source de lumière d'excitation 10, la source de lumière d'excitation émettant une onde lumineuse d'excitation 11, impulsionnelle ou modulée en amplitude, selon une fréquence d'excitation $f_{11}$, dans une longueur d'onde correspondant à une longueur d'onde d'absorption $\lambda_4$ de l'analyte ;
- Etape 130 : sous l'effet de l'illumination du milieu par l'onde lumineuse d'excitation, émission d'une onde photoacoustique 6, se propageant à travers la cavité creuse 16, suite à quoi la membrane du transducteur vibre à la fréquence d'excitation $f_{11}$, de telle sorte que la fréquence de résonance $\lambda_r$ du guide d'onde 20 du transducteur est modulée périodiquement selon une fréquence de modulation $f_{\lambda_r}$ égale à la fréquence d'excitation $f_{11}$.
- Etape 140 : détermination, par le circuit d'asservissement 41, d'une modulation temporelle d'une longueur d'onde de résonance $\lambda_r$ du guide d'onde 20, à la fréquence d'excitation $f_{11}$, la longueur d'onde de résonance correspondant à un pic de transmission du guide d'onde ;

- Etape 150 : en fonction de la modulation temporelle déterminée par le circuit d'asservissement, calcul d'une amplitude de modulation de la longueur d'onde de résonance à une fréquence dépendant de la fréquence d'excitation, et notamment à une fréquence deux fois supérieure à la fréquence d'excitation ;
- Etape 160 : détection de la présence de l'analyte dans le milieu et/ou estimation d'une concentration d'analyte en fonction de l'amplitude de modulation.

La détection de la présence d'analyte ou l'estimation de la concentration peut être effectuée en prenant en compte une calibration, effectuée en mettant en œuvre un échantillon de calibration, représentatif du milieu 2, comportant une quantité d'analyte connue.

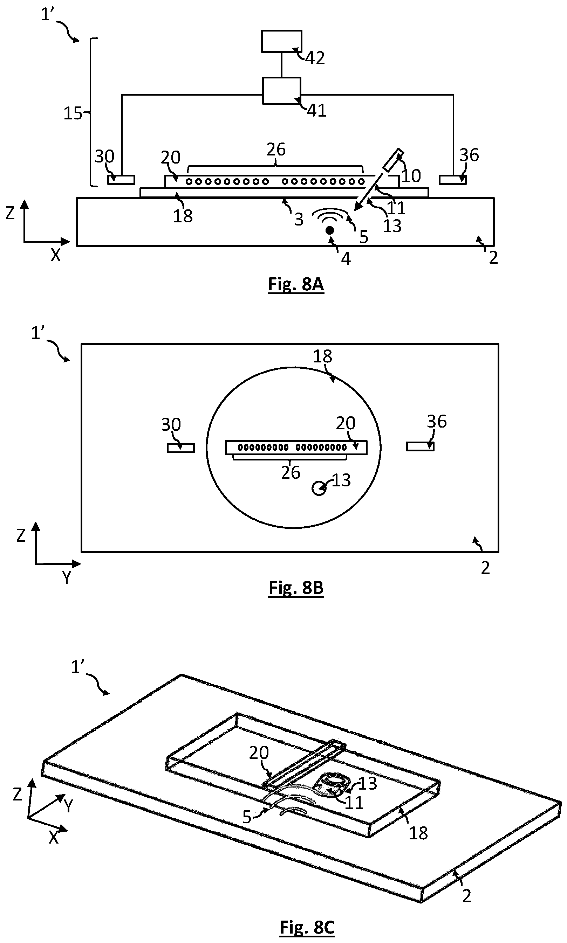

Les figures 8A à 8C illustrent un deuxième mode de réalisation dit photothermique, d'un dispositif 1' selon l'invention. Le dispositif 1' est configuré pour être appliqué contre un milieu 2 à analyser.

Le dispositif 1' comporte des composants tels que décrits en lien avec le premier mode de réalisation. Une différence est que la membrane 18 forme la paroi d'appui 3, à travers laquelle une ouverture 13 est ménagée.

Le dispositif 1' comporte une source de lumière d'excitation 10, émettant une onde lumineuse d'excitation 11. Il s'agit d'une source laser impulsionnelle, la fréquence d'impulsion étant par exemple comprise entre 10 Hz et 500 Hz, par exemple 100 Hz. L'onde lumineuse d'excitation 11 se propage jusqu'au milieu 2. Selon ce mode de réalisation, la source de lumière d'excitation est configurée de telle sorte que l'onde lumineuse d'excitation 11, se propage jusqu'au milieu 2 à travers à travers l'ouverture 13 pratiquée à travers la membrane 18.

Sous l'effet de la présence d'un analyte 4 dans le milieu, une partie de l'onde d'excitation est absorbée. Il en résulte un échauffement 5 du milieu 4. Lorsque l'analyte est présent dans une partie superficielle du milieu, l'échauffement du milieu 5 se propage, par diffusion thermique, jusqu'à la membrane 18 formant la face de contact. Par partie superficielle du milieu, on entend une partie comprise entre la face de contact et une profondeur allant jusqu'à 2 ou 3 fois la profondeur de pénétration thermique du matériau formant le milieu analysé.

La membrane 18 est présente de préférence une conductivité thermique, de telle sorte que la température de la membrane puisse être considérée comme suivant les évolutions de la température du milieu 2, éventuellement à un décalage temporel près. La membrane est suffisamment fine pour présenter une telle conductivité thermique.

Selon ce mode de réalisation, le transducteur 15 est un transducteur thermique : sa fonction est de détecter, et de préférence de quantifier, une modulation périodique de la température de la membrane sous l'effet de l'excitation périodique du milieu 2 par l'onde lumineuse d'excitation 11.

Le transducteur 15 comporte une source de lumière auxiliaire 30, un guide d'onde 20, un photodétecteur 36 et un circuit d'asservissement 41 tels que décrits en lien avec le mode de réalisation photoacoustique.

Sous l'effet d'un échauffement de la membrane 18, la température du guide d'onde 20 varie. Il en résulte une variation de la longueur d'onde de résonance λr, notamment du fait de la variation des indices de réfraction des matériaux 21, 22 composant le guide d'onde.

La variation de la longueur d'onde de résonance sous l'effet de la température peut être explicitée par l'expression :

$$\frac{1}{\lambda_B} \times \frac{\partial \lambda_B}{\partial T} = 6.67 \times 10^{-6} \ °C^{-1} \quad (6)$$

T correspond à la température.

Lorsque la longueur d'onde $\lambda_{32}$ de la source auxiliaire 32 est égale à 1.55 µm, la sensibilité du transducteur peut être estimée à 11 pm/°C.

Lorsqu'on met en oeuvre le mode de réalisation photothermique on peut détecter la présence d'un analyte, voire estimer sa concentration, dans un milieu analysé, en mettant en œuvre les étapes suivantes, représentées sur la figure 7B.

- Etape 110 : application du dispositif 1 sur le milieu, de telle sorte que la face de contact, en l'occurrence la membrane, soit maintenue contre le milieu ;
- Etape 120 activation de la source de lumière d'excitation 10, la source de lumière d'excitation émettant une onde lumineuse d'excitation 11, à une fréquence d'excitation $f_{11}$ dans une longueur d'onde correspondant à une longueur d'onde d'absorption $\lambda_4$ de l'analyte ;
- Etape 135 : sous l'effet de l'illumination du milieu par l'onde lumineuse d'excitation, échauffement périodique du milieu 2, se propageant, par diffusion thermique, jusqu'à la membrane 18, de telle sorte que la fréquence de résonance $\lambda_r$ du guide d'onde 20 du transducteur est modulée périodiquement selon une fréquence de modulation $f_{\lambda_r}$ égale à la fréquence d'excitation $f_{11}$.
- Etape 140 : détermination, par le circuit d'asservissement 41, d'une modulation temporelle d'une longueur d'onde de résonance $\lambda_r$ du guide d'onde 20, à la fréquence d'excitation $f_{11}$, la longueur d'onde de résonance correspondant à un pic de transmission du guide d'onde, la modulation ;
- Etape 155 : en fonction de la variation temporelle déterminée par le circuit d'asservissement, calcul d'une amplitude de variation de la longueur d'onde de résonance
- Etape 165 : détection de la présence de l'analyte dans le milieu et/ou estimation d'une concentration d'analyte en fonction de la variation.

La détection de la présence d'analyte ou l'estimation de la concentration peut être effectuée en prenant en compte une calibration, effectuée en mettant en œuvre un échantillon de calibration, représentatif du milieu 2, comportant une quantité d'analyte connue.

L'invention pourra être mise en œuvre sur des échantillons gazeux, liquides ou solides, dans des applications de détection d'analyte dans les domaines de l'environnement, de l'industrie, par exemple l'industrie agroalimentaire, ou le domaine biomédical.

## Revendications

1. Dispositif de détection (1, 1'), destiné à être appliqué, par une face de contact (3), contre un milieu à analyser (2), le milieu analysé étant susceptible de comporter un analyte (4), absorbant la lumière selon au moins une longueur d'onde d'absorption, le dispositif comportant :

   - une ouverture (13), ménagée dans la face de contact (3) ;
   - une source de lumière d'excitation (10), configurée pour émettre une onde lumineuse d'excitation (11) impulsionnelle ou modulée en amplitude, à une fréquence d'excitation ($f_{11}$), dans une bande spectrale d'excitation ($\Delta\lambda_{11}$) comportant la longueur d'onde d'absorption, le dispositif étant agencé de telle sorte que l'onde lumineuse d'excitation (11) se propage à travers l'ouverture (13), vers le milieu analysé ;
   - un transducteur (15), destiné à mesurer une réponse du milieu suite à un échauffement périodique du milieu résultant d'une absorption, par l'analyte, d'une partie de l'onde lumineuse d'excitation (11) ;

   le dispositif étant tel que le transducteur (15) comporte :

   - une membrane (18), supportant un guide d'onde (20) ;
   - le guide d'onde comportant un premier réflecteur ($24_1$), et un deuxième réflecteur ($24_2$), chaque réflecteur réfléchissant la lumière dans une bande spectrale de réflexion ($\Delta\lambda_{20}$),
   - le premier réflecteur et le deuxième réflecteur étant espacés l'un de l'autre, pour former une cavité optique résonante (26), la cavité optique résonante définissant une longueur d'onde de résonance ($\lambda_r$), dans la bande spectrale de réflexion ;
   - de telle sorte que le guide d'onde :

   • transmet la lumière à la longueur d'onde de résonance ($\lambda_r$) ;
   • réfléchit la lumière, dans la bande spectrale de réflexion ($\Delta\lambda_{20}$), en dehors de la longueur d'onde de résonance ;

   le transducteur comportant également:

   - une source de lumière auxiliaire (30) laser, configurée pour émettre une onde lumineuse auxiliaire (32), dans la bande spectrale de réflexion ($\Delta\lambda_{20}$), dans le guide d'onde ;
   - un photodétecteur (36), agencé pour détecter une onde lumineuse transmise (34) par le guide d'onde à la longueur d'onde de résonance ($\lambda_r$);
   - un circuit d'asservissement (41), relié au photodétecteur (36), et configuré pour déterminer une modulation temporelle périodique ($\lambda_r(t)$) de la longueur d'onde de résonance de la cavité optique résonante (26) ;

   le dispositif étant tel que :

   - le guide d'onde (20) est formé directement sur la membrane, le guide d'onde étant formé à partir d'une couche mince déposée sur la membrane. ;
   - la membrane (18) est configurée pour se déformer sous l'effet de l'échauffement périodique du milieu ;
   - le circuit d'asservissement (41) comporte une boucle d'asservissement, reliée à la source de lumière auxiliaire (30), et configurée pour asservir la longueur d'onde ($\lambda_{32}$) de l'onde lumineuse (32) émise par la source de lumière auxiliaire (30) sur la longueur d'onde de résonance ($\lambda_r$) de la cavité optique résonante (26).

2. Dispositif selon la revendication 1, comportant une unité de traitement (42), reliée au circuit d'asservissement, et configurée pour :

   - estimer une amplitude ($A_{\lambda r}$) de la modulation temporelle de la longueur d'onde de résonance ($\lambda_r$);
   - détecter la présence de l'analyte dans le milieu (2) en fonction de l'amplitude estimée.

3. Dispositif selon la revendication 2, dans lequel l'unité de traitement est configurée pour estimer une concentration de l'analyte dans le milieu (2) en fonction de l'amplitude ($A_{\lambda r}$) estimée.

4. Dispositif (1) selon l'une quelconque des revendications précédentes, comportant une cavité creuse (16), débouchant sur l'ouverture (13), le transducteur étant relié à la cavité creuse, et dans lequel le transducteur (15) est un transducteur acoustique, configuré pour détecter une amplitude d'une onde photoacoustique (6), se propageant depuis l'ouverture, à travers la cavité creuse, de telle sorte que sous l'effet de l'illumination du milieu par l'onde lumineuse d'excitation (11), la membrane (18) vibre selon la fréquence d'excitation ($f_{11}$), entraînant la modulation temporelle de la longueur d'onde de résonance ($\lambda_r$), à une fréquence de modulation ($f_{\lambda r}$) égale à la fréquence d'excitation.

5. Dispositif selon la revendication 4, dans lequel la membrane (18) s'étend parallèlement à la face de contact (3).

6. Dispositif (1') selon l'une quelconque des revendications 1 à 3, dans lequel

   - la membrane (18) du transducteur (15) forme la face de contact (3) du dispositif, destinée à être appliquée au contact du milieu (2),
   - l'ouverture (13) s'étend à travers la membrane (20) ;
   - le transducteur (15) est un transducteur thermique, de telle sorte que sous l'effet de l'illumination du milieu par l'onde lumineuse d'excitation (11), la température de la membrane suit une variation temporelle périodique, entraînant la modulation temporelle périodique de la longueur d'onde de résonance ($\lambda_r$).

7. Dispositif selon l'une quelconque des revendications précédentes, dans lequel au moins un réflecteur, ou chaque réflecteur, est un miroir de Bragg, formé par une modulation périodique d'un indice de réfraction le long du guide d'onde.

8. Dispositif selon la revendication 8, dans lequel le circuit d'asservissement (41) met en œuvre un asservissement de type Pound-Drever-Hall.

9. Dispositif selon l'une quelconque des revendications précédentes, dans lequel :

   - le premier réflecteur ($24_1$) est un premier miroir de Bragg ;
   - le deuxième réflecteur ($24_2$) est un deuxième miroir de Bragg ;
   - le premier miroir de Bragg et le deuxième miroir de Bragg forment un même miroir de Bragg comportant un défaut (25), le premier miroir de Bragg et le deuxième miroir de Bragg correspondant aux parties du miroir de Bragg s'étendant respectivement de part et d'autre du défaut.

10. Dispositif selon l'une quelconque des revendications 1 à 5, dans lequel :

   - la membrane (18) présente, lorsqu'elle se déforme, au moins un ventre de vibration l'amplitude de vibration étant maximale au niveau de chaque ventre de vibration ;
   - le guide d'onde (20) s'étend au niveau d'au moins un ventre de vibration.

11. Dispositif selon l'une quelconque des revendications précédentes, dans lequel le premier réflecteur et le deuxième réflecteur sont obtenus par inscription du guide d'onde par un faisceau laser, de façon à obtenir une modulation périodique de l'indice de réfraction dans le guide d'onde.

12. Procédé de détection d'un analyte (4) dans un milieu (2), l'analyte (4) absorbant la lumière selon au moins une longueur d'onde d'absorption, le procédé comportant les étapes suivantes :

   a) application d'un dispositif (1, 1') selon l'une quelconque des revendications précédentes contre le milieu (2), de telle sorte que la face de contact (3) du dispositif soit maintenue contre le milieu ;
   b) activation de la source de lumière d'excitation (10), la source de lumière d'excitation émettant une onde lumineuse d'excitation (11), impulsionnelle ou modulée en amplitude, selon une fréquence d'excitation ($f_{11}$), dans une longueur d'onde correspondant à une longueur d'onde d'absorption de l'analyte ;
   c) détermination, par le circuit d'asservissement (41), d'une modulation périodique d'une longueur d'onde de résonance ($\lambda_r$) du guide d'onde (20) du transducteur (15), à une fréquence de modulation correspondant à la fréquence d'excitation, la longueur d'onde de résonance correspondant à un pic de transmission du guide d'onde ;
   d) en fonction de la modulation périodique déterminée par le circuit d'asservissement, détection de la présence de l'analyte dans le milieu.

13. Procédé selon la revendication 12, dans lequel le dispositif est un dispositif (1) selon l'une quelconque des revendications 4 à 5, le procédé comportant :

   - suite à l'étape b), un échauffement périodique du milieu (2), selon la fréquence d'excitation ($f_{11}$), entraînant une émission d'une onde photoacoustique (6), se propageant à travers la cavité creuse (16), sous l'effet de laquelle la membrane (18) du transducteur (15) vibre à la fréquence d'excitation ($f_{11}$), de telle sorte que la fréquence de résonance ($\lambda_r$) du guide d'onde (20) du transducteur est modulée selon une fréquence de modulation ($f_{\lambda r}$) égale à la fréquence d'excitation ($f_{11}$) ;

- lors de l'étape d) :

   • une estimation d'une amplitude ($A_{\lambda r}$) de la modulation périodique de la longueur d'onde de résonance, à la fréquence de modulation ($f_{\lambda r}$);
   • une détection de la présence d'analyte en fonction de l'amplitude estimée.

14. Procédé selon la revendication 12, dans lequel le dispositif est un dispositif (1') selon la revendication 6, le procédé comportant :

   - suite à l'étape b), un échauffement périodique du milieu (2), selon la fréquence d'excitation, entraînant un échauffement périodique (5) de la membrane (18) à la fréquence d'excitation ($f_{11}$), de telle sorte que la fréquence de résonance ($\lambda_r$) du guide d'onde (20) du transducteur est modulée selon une fréquence de modulation ($f_{\lambda r}$) correspondant à la fréquence d'excitation;
   - lors de l'étape d) :

      • une estimation d'une amplitude de la modulation périodique de la longueur d'onde de résonance à la fréquence de modulation;
      • une détection de la présence d'analyte en fonction de l'amplitude estimée.

15. Procédé selon l'une quelconque des revendications 12 à 14, dans lequel l'étape d) comporte également une estimation d'une concentration de l'analyte dans le milieu analysé.

**Patentansprüche**

1. Detektionsvorrichtung (1, 1'), die dazu bestimmt ist, mit einer Kontaktfläche (3) an ein zu analysierendes Medium (2) angelegt zu werden, wobei das analysierte Medium einen Analyten (4) enthalten kann, der Licht gemäß mindestens einer Absorptionswellenlänge absorbiert, wobei die Vorrichtung umfasst:

   - eine in der Kontaktfläche (3) ausgebildete Öffnung (13);
   - eine Anregungslichtquelle (10), die so konfiguriert ist, dass sie eine gepulste oder amplitudenmodulierte Anregungslichtwelle (11) mit einer Anregungsfrequenz ($f_{11}$) in einem Anregungsspektralband ($\Delta\lambda_{11}$) mit der Absorptionswellenlänge, wobei die Vorrichtung so angeordnet ist, dass sich die Anregungslichtwelle (11) durch die Öffnung (13) in Richtung des zu analysierenden Mediums ausbreitet;
   - ein Wandler (15) zum Messen einer Reaktion des Mediums auf eine periodische Erwärmung des Mediums, die durch die Absorption eines Teils der Anregungslichtwelle (11) durch den Analyten entsteht;

wobei die Vorrichtung so ausgebildet ist, dass der Wandler (15) umfasst:

   - eine Membran (18), die einen Wellenleiter (20) trägt;
   - wobei der Wellenleiter einen ersten Reflektor ($24_1$) und einen zweiten Reflektor ($24_2$) aufweist, wobei jeder Reflektor Licht in einem Reflexionsspektralband ($\Delta\lambda_{20}$) reflektiert,
   - wobei der erste Reflektor und der zweite Reflektor voneinander beabstandet sind, um eine optische Resonanzkavität (26) zu bilden, wobei die optische Resonanzkavität eine Resonanzwellenlänge ($\lambda_r$) im Reflexionsspektralband definiert;
   - so dass der Wellenleiter:

      • Licht mit der Resonanzwellenlänge ($\lambda_r$) überträgt;
      • Licht im Reflexionsspektralband ($\Delta\lambda_{20}$) außerhalb der Resonanzwellenlänge reflektiert;

wobei der Wandler außerdem umfasst:

   - eine Laser-Hilfslichtquelle (30), die so konfiguriert ist, dass sie eine Hilfslichtwelle (32) im Reflexionsspektralband ($\Delta\lambda_{20}$) in den Wellenleiter emittiert;
   - einen Fotodetektor (36), der so angeordnet ist, dass er eine vom Wellenleiter bei der Resonanzwellenlänge ($\lambda_r$) übertragene Lichtwelle (34) erfasst;
   - eine Regelschaltung (41), die mit dem Fotodetektor (36) verbunden ist und so konfiguriert ist, dass sie eine periodische Zeitmodulation ($\lambda_r$(t)) der Resonanzwellenlänge der optischen Resonanzkavität (26) bestimmt;

wobei die Vorrichtung so beschaffen ist, dass:

   - der Wellenleiter (20) direkt auf der Membran ausgebildet ist, wobei der Wellenleiter aus einer auf die Membran aufgebrachten dünnen Schicht gebildet ist;
   - die Membran (18) so konfiguriert ist, dass sie sich unter dem Einfluss der periodischen Erwärmung des Mediums verformt;
   - die Regelschaltung (41) eine Regelschleife aufweist, die mit der Hilfslichtquelle (30) verbunden und so konfiguriert ist, dass sie die Wellenlänge ($\lambda_{32}$) der von der Hilfslichtquelle (30) emittierten Lichtwelle (32) auf die Resonanzwellenlänge ($\lambda_r$) der optischen Resonanzkavität (26) zu regeln.

**2.** Vorrichtung nach Anspruch 1, mit einer mit der Regelschaltung verbundenen Verarbeitungseinheit (42), die dazu ausgelegt ist:

- eine Amplitude ($A_{\lambda r}$) der Zeitmodulation der Resonanzwellenlänge ($\lambda_r$) zu schätzen;
- das Vorhandensein des Analyten in dem Medium (2) in Abhängigkeit von der geschätzten Amplitude zu detektieren.

**3.** Vorrichtung nach Anspruch 2, wobei die Verarbeitungseinheit dazu konfiguriert ist, eine Konzentration des Analyten in dem Medium (2) in Abhängigkeit von der geschätzten Amplitude ($A_{\lambda r}$) zu schätzen.

**4.** Vorrichtung (1) nach einem der vorstehenden Ansprüche, mit einem Hohlraum (16), der in die Öffnung (13) mündet, wobei der Wandler mit dem Hohlraum verbunden ist, und wobei der Wandler (15) ein akustischer Wandler ist, der so konfiguriert ist, dass er eine Amplitude einer photoakustischen Welle (6) erfasst, die sich von der Öffnung durch den Hohlraum ausbreitet, so dass unter der Wirkung der Beleuchtung des Mediums durch die Anregungslichtwelle (11) die Membran (18) mit der Anregungsfrequenz ($f_{11}$) schwingt, wodurch die Zeitmodulation der Resonanzwellenlänge ($\lambda_r$) mit einer Modulationsfrequenz ($f_{\lambda r}$) erfolgt, die gleich der Anregungsfrequenz ist.

**5.** Vorrichtung nach Anspruch 4, wobei sich die Membran (18) parallel zur Kontaktfläche (3) erstreckt.

**6.** Vorrichtung (1') gemäß einem der Ansprüche 1 bis 3, wobei

- die Membran (18) des Wandlers (15) bildet die Kontaktfläche (3) der Vorrichtung, die dazu bestimmt ist, mit dem Medium (2) in Kontakt zu kommen,
- die Öffnung (13) sich durch die Membran (20) erstreckt;
- der Wandler (15) ein thermischer Wandler ist, so dass unter der Einwirkung der Beleuchtung des Mediums durch die Anregungslichtwelle (11) die Temperatur der Membran einer periodischen zeitlichen Änderung folgt, was zu einer periodischen Zeitmodulation der Resonanzwellenlänge ($\lambda_r$) führt.

**7.** Vorrichtung nach einem der vorstehenden Ansprüche, wobei mindestens ein Reflektor oder jeder Reflektor ein Bragg-Spiegel ist, der durch eine periodische Modulation eines Brechungsindexes entlang des Wellenleiters gebildet ist.

**8.** Vorrichtung nach Anspruch 8, wobei die Regelschaltung (41) eine Pound-Drever-Hall-Regelung durchführt.

**9.** Vorrichtung nach einem der vorstehenden Ansprüche, wobei:

- der erste Reflektor ($24_1$) ein erster Bragg-Spiegel ist;
- der zweite Reflektor ($24_2$) ein zweiter Bragg-Spiegel ist;
- der erste Bragg-Spiegel und der zweite Bragg-Spiegel einen einzigen Bragg-Spiegel mit einem Defekt (25) bilden, wobei der erste Bragg-Spiegel und der zweite Bragg-Spiegel den Teilen des Bragg-Spiegels entsprechen, die sich jeweils auf beiden Seiten des Defekts erstrecken.

**10.** Vorrichtung nach einem der Ansprüche 1 bis 5, wobei:

- die Membran (18) bei ihrer Verformung mindestens einen Schwingungsbauch aufweist, wobei die Schwingungsamplitude an jedem Schwingungsbauch maximal ist;
- der Wellenleiter (20) sich auf Höhe mindestens eines Schwingungsbauchpunktes erstreckt.

**11.** Vorrichtung nach einem der vorstehenden Ansprüche, wobei der erste Reflektor und der zweite Reflektor durch Einschreiben des Wellenleiters mit einem Laserstrahl erhalten werden, so dass eine periodische Modulation des Brechungsindexes im Wellenleiter erhalten wird.

**12.** Verfahren zum Nachweis eines Analyten (4) in einem Medium (2), wobei der Analyt (4) Licht gemäß mindestens einer Absorptionswellenlänge absorbiert, wobei das Verfahren die folgenden Schritte umfasst:

a) Anlegen einer Vorrichtung (1, 1') gemäß einem der vorstehenden Ansprüche an das Medium (2), so dass die Kontaktfläche (3) der Vorrichtung gegen das Medium gehalten wird;
b) Aktivierung der Anregungslichtquelle (10), wobei die Anregungslichtquelle eine gepulste oder amplitudenmodulierte Anregungslichtwelle (11) mit einer Anregungsfrequenz ($f_{11}$) in einer Wellenlänge entsprechend einer Absorptionswellenlänge des Analyten aussendet;
c) Bestimmung einer periodischen Modulation einer Resonanzwellenlänge ($\lambda_r$) des Wellenleiters (20) des Wandlers (15) durch die Regelschaltung (41) bei einer Modulationsfrequenz, die der Anregungsfrequenz entspricht, wobei die Resonanzwellenlänge einer Durchlässigkeitsspitze des Wellenleiters entspricht;
d) in Abhängigkeit von der durch die Regelschaltung bestimmten periodischen Modulation, Detektion des Vorhandenseins des Analyten in dem Medium.

**13.** Verfahren nach Anspruch 12, wobei die Vorrichtung eine Vorrichtung (1) nach einem der Ansprüche 4 bis 5 ist, wobei das Verfahren umfasst:

- Nach Schritt b) wird das Medium (2) periodisch erwärmt, entsprechend der Anregungsfrequenz ($f_{11}$) eine periodische Erwärmung des Mediums (2) erfolgt, die eine photoakustische Welle (6) auslöst, die sich durch den Hohlraum (16) ausbreitet und unter deren Einwirkung die Membran (18) des Wandlers (15) mit der Anregungsfrequenz ($f_{11}$) in Schwingung versetzt wird, so dass die Resonanzfrequenz ($\lambda_r$) des Wellenleiters (20) des Wandlers entsprechend einer Modulationsfrequenz ($f_{\lambda r}$) moduliert wird, die gleich der Anregungsfrequenz ($f_{11}$) ist;
- in Schritt d):

• eine Schätzung einer Amplitude ($A_{\lambda r}$) der periodischen Modulation der Resonanzwellenlänge bei der Modulationsfrequenz ($f_{\lambda r}$);
• eine Detektion des Vorhandenseins des Analyten in Abhängigkeit von der geschätzten Amplitude.

**14.** Verfahren nach Anspruch 12, wobei die Vorrichtung eine Vorrichtung (1') nach Anspruch 6 ist, wobei das Verfahren umfasst:

- nach Schritt b) ein periodisches Erwärmen des Mediums (2) entsprechend der Anregungsfrequenz, was zu einer periodischen Erwärmung (5) der Membran (18) bei der Anregungsfrequenz ($f_{11}$) führt, so dass die Resonanzfrequenz ($\lambda_r$) des Wellenleiters (20) des Wandlers entsprechend einer der Anrregungsfrequenz entsprechenden Modulationsfrequenz ($f_{\lambda r}$) moduliert wird;
- in Schritt d):

• eine Schätzung einer Amplitude der periodischen Modulation der Resonanzwellenlänge bei der Modulationsfrequenz;
• eine Detektion des Vorhandenseins des Analyten in Abhängigkeit von der geschätzten Amplitude.

**15.** Verfahren nach einem der Ansprüche 12 bis 14, wobei Schritt d) auch eine Schätzung einer Konzentration des Analyten in dem analysierten Medium umfasst.

**Claims**

**1.** A detecting device (1, 1'), intended to be applied, via a contact face (3), against a medium to be analyzed (2), the analyzed medium being liable to contain an analyte (4), which absorbs light at at least one absorption wavelength, the device comprising:

- an aperture (13), formed in the contact face (3);
- an exciting light source (10), configured to emit an exciting light wave (11), which is pulsed or amplitude-modulated at an excitation frequency ($f_{11}$), in an excitation spectral band ($\Delta\lambda_{11}$) comprising the absorption wavelength, the device being arranged such that the exciting light wave (11) propagates through the aperture (13), toward the analyzed medium;
- a transducer (15), intended to measure a response of the medium following periodic heating of the medium resulting from absorption, by the analyte, of some of the exciting light wave (11);

the device being such that the transducer (15) comprises:

- a membrane (18), carrying a waveguide (20);
- the waveguide comprising a first reflector ($24_1$), and a second reflector ($24_2$), each reflector reflecting light in a reflection spectral band ($\Delta\lambda_{20}$),
- the first reflector and the second reflector being spaced apart from each other, so as to form a resonant optical cavity (26), the resonant optical cavity defining a resonant wavelength ($\lambda_r$), in the reflection spectral band;
- such that the waveguide:

• transmits light at the resonant wavelength ($\lambda_r$);
• reflects light, in the reflection spectral band ($\Delta\lambda_{20}$), not of the resonant wavelength;

the transducer also comprising:

- a source (30) of auxiliary laser light, configured to emit an auxiliary light wave (32), in the reflection spectral band ($\Delta\lambda_{20}$), into the waveguide;
- a photodetector (36), arranged to detect a light wave (34) transmitted by the waveguide at the resonant wavelength ($\lambda_r$);
- a servo circuit (41), connected to the photodetector (36), and configured to determine a periodic time-dependent modulation ($\lambda_r(t)$) of the resonant wavelength of the resonant optical cavity (26);

the device being such that:

- the waveguide (20) is formed directly on the membrane;

- the membrane (18) is configured to deform under the effect of the periodic heating of the medium;
- the servo circuit (41) comprises a servo loop, connected to the auxiliary light source (30), and configured to servo-control the wavelength ($\lambda_{32}$) of the light wave (32) emitted by the auxiliary light source (30) to the resonant wavelength ($\lambda_r$) of the resonant optical cavity (26).

2. The device as claimed in claim 1, comprising a processing unit (42), connected to the servo circuit, and configured to:

   - estimate an amplitude ($A_{\lambda_r}$) of the time-dependent modulation of the resonant wavelength ($\lambda_r$);
   - detect the presence of the analyte in the medium (2) depending on the estimated amplitude.

3. The device as claimed in claim 2, wherein the processing unit is configured to estimate a concentration of the analyte in the medium (2) depending on the estimated amplitude ($A_{\lambda_r}$).

4. The device (1) as claimed in any one of the preceding claims, comprising a hollow cavity (16) that opens onto the aperture (13), the transducer being connected to the hollow cavity, and wherein the transducer (15) is an acoustic transducer configured to detect an amplitude of a photoacoustic wave (6) that propagates from the aperture through the hollow cavity, such that, under the effect of the illumination of the medium by the exciting light wave (11), the membrane (18) vibrates at the excitation frequency ($f_{11}$), resulting in the time-dependent modulation of the resonant wavelength ($\lambda_r$), at a modulation frequency ($f_{\lambda_r}$) equal to the excitation frequency.

5. The device as claimed in claim 4, wherein the membrane (18) lies parallel to the contact face (3).

6. The device (1') as claimed in any one of claims 1 to 3, wherein:

   - the membrane (18) of the transducer (15) forms the contact face (3) of the device, the contact face being intended to be applied so as to make contact with the medium (2);
   - the aperture (13) extends through the membrane (20);
   - the transducer (15) is a thermal transducer, such that, under the effect of the illumination of the medium by the exciting light wave (11), the temperature of the membrane exhibits a periodic time-dependent variation, resulting in the periodic time-dependent modulation of the resonant wavelength ($\lambda_r$).

7. The device as claimed in any one of the preceding claims, wherein at least one reflector, or each reflector, is a Bragg mirror, formed via a periodic modulation of a refractive index along the waveguide.

8. The device as claimed in claim 8, wherein the servo circuit (41) implements a Pound-Drever-Hall servo technique.

9. The device as claimed in any one of the preceding claims, wherein:

   - the first reflector ($24_1$) is a first Bragg mirror;
   - the second reflector ($24_2$) is a second Bragg mirror;
   - the first Bragg mirror and the second Bragg mirror form the same Bragg mirror, the latter comprising a defect (25), the first Bragg mirror and the second Bragg mirror corresponding to the portions of the Bragg mirror lying on either side of the defect, respectively.

10. The device as claimed in any one of claims 1 to 5, wherein:

    - the membrane (18) exhibits, when it deforms, at least one vibration antinode, the amplitude of vibration being maximum at each antinode;
    - the waveguide (20) lies level with at least one antinode.

11. The device as claimed in any one of the preceding claims, wherein the first reflector and the second reflector are obtained by inscribing the waveguide with a laser beam, so as to obtain a periodic modulation of the refractive index in the waveguide.

12. A method for detecting an analyte (4) in a medium (2), the analyte (4) absorbing light at at least one absorption wavelength, the method comprising the following steps:

    b) applying a device (1, 1') according to any one of the preceding claims against the medium (2), such that the contact face (3) of the device is held against the medium;
    c) activating the exciting light source (10), the exciting light source emitting an exciting light wave (11), which is pulsed or amplitude-modulated at an excitation frequency ($f_{11}$), with a wavelength corresponding to an absorption wavelength of the analyte;
    d) determining, by means of the servo circuit (41), a periodic modulation of a resonant wavelength ($\lambda_r$) of the waveguide (20) of the transducer (15), at a modulation frequency corresponding to the excitation frequency, the resonant wavelength corresponding to a transmission peak of the waveguide;
e) depending on the periodic modulation determined by the servo circuit, detecting the presence of the analyte in the medium.

13. The method as claimed in claim 12, wherein the device is a device (1) as claimed in any one of claims 4 to 5, the method comprising:

- following step b), heating the medium (2) periodically, at the excitation frequency ($f_{11}$), so as to cause an emission of a photoacoustic wave (6), which propagates through the hollow cavity (16), and under the effect of which the membrane (18) of the transducer (15) vibrates at the excitation frequency ($f_{11}$), such that the resonant frequency ($\lambda_r$) of the waveguide (20) of the transducer is modulated at a modulation frequency ($f_{\lambda_r}$) equal to the excitation frequency ($f_{11}$);
- in step d):

• estimating an amplitude ($A_{\lambda_r}$) of the periodic modulation of the resonant wavelength, at the modulation frequency ($f_{\lambda_r}$);
• detecting the presence of analyte depending on the estimated amplitude.

14. The method as claimed in claim 12, wherein the device is a device (1') as claimed in claim 6, the method comprising:

- following step b), heating the medium (2) periodically, at the excitation frequency, so as to cause periodic heating (5) of the membrane (18) at the excitation frequency ($f_{11}$), such that the resonant frequency ($\lambda_r$) of the waveguide (20) of the transducer is modulated at a modulation frequency ($f_{\lambda_r}$) corresponding to the excitation frequency;
- in step d):

• estimating an amplitude of the periodic modulation of the resonant wavelength at the modulation frequency;
• detecting the presence of analyte depending on the estimated amplitude.

15. The method as claimed in any one of claims 12 to 14, wherein step d) also comprises estimating a concentration of the analyte in the analyzed medium.

**Fig. 1A**

**Fig. 1B**

**Fig. 1C**

**Fig. 1D**

**Fig. 1E**

**Fig. 2A**

$\Delta\lambda_{20}$

$\lambda$ (nm)

**Fig. 2B**

Fig. 2C

Fig. 2D

**Fig. 3A**

**Fig. 3B**

**Fig. 3C**

**Fig. 3D**

**Fig. 3E**

**Fig. 3F**

**Fig. 4A**

**Fig. 4B**

**Fig. 5A**

**Fig. 5B**

**Fig. 5C**

EP 4 081 782 B1

Fig. 6A

Fig. 6B

Fig. 6C

Fig. 6D

Fig. 7A

Fig. 7B

**Fig. 8A**

**Fig. 8B**

**Fig. 8C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019170884 A

- EP 3359949 B1

**Littérature non-brevet citée dans la description**

- **ROSENTHAL**. *Embedded ultrasound sensor in a silicon-on-insulator photonic platform*
- **GUAN**. *Acoustic and Ultrasonic Detection With Radio-Frequency Encoded Fiber Laser Sensors*
- **YANG et al.** *Time-resolved photoacoustic spectroscopy using fiber Bragg grating acoustic transducers*
- **GUAN B.** *Acoustic and ultrasonic detection with radio-frequency*
- **JUNTAO W.** *Fiber-optic photoacoustic spectroscopy sensor for harsh environment gas detection*
- **WEI H.** *Direct laser writing of a phase-shifted Bragg grating waveguide for ultrasound detection*
- **LEINDERS, S**. *A sensitive optical micro-machined ultrasound sensor (OMUS) based on a silicon photonic ring resonator on an acoustical membrane*
- IR-spectroscopy for skin in vivo : Optimal skin sites and properties for non-invasive glucose measurement by photoacoustic and photothermal spectroscopy. **BAUER AJ.** Journal of biopohtonics. 2018, vol. 11

- Windowless ultrasound photoacoustic cell for in-vivo mid-IR spectroscopy of human epidermis : Low interference by changes of air pressure, temperature, and humidity caused by skin contact opens the possibility for a non-invasive monitoring of glucose in the interstitial fluid. *Rev. Sci. Instrum.*, 2013, vol. 84, 084901
- **CHOW J.H.** Phase-sensitive interrogation of fiber Bragg grating resonators for sensing applications. *J. Light. Technol.*, May 2005, vol. 23 (5), 1881-1889
- **BLACK E.** An introduction to Pound-Drever-Hall laser frequency stabilization. *Am. J. Phys.*, January 2001, vol. 69 (1)
- **CHOW J.H.** Phase-sensitive interrogation of fiber-Bragg grating resonators for sensing applications. *J. Light. Technol.*, May 2005, vol. 23 (5), 1881-1889